# DEMANDE DE BREVET EUROPEEN

(11) **EP 1 940 131 A1**
(43) Date de publication de la demande: **02.07.2008**
(21) Numéro de dépôt: 07291645.5
(22) Date de dépôt: 31.12.2007
(51) Int. Cl.: H04L 29/12, H04Q 7/38

(54) **Système et procédé de gestion de joignabilité via au moins un réseau de communication**

(30) Priorité: 31.12.2006 FR 0611549
(71) Demandeur: Societé Française du Radiotéléphone, 75008 Paris (FR)
(72) Inventeur: Ha, Thanh-Luu, 77600 Bussy Saint Georges (FR); De Moissac, arnaud, 75017 Paris (FR)
(74) Mandataire: Debay, Yves

(57) **Abrégé**

La présente invention concerne un système et un procédé de gestion de la joignabilité d'au moins un utilisateur, dit appelé, sur au moins un terminal appelé, pour la joignabilité de l'appelé par un utilisateur, dit appelant, sur un terminal (2) appelant, dans lesquels au moins un module (M3) de gestion, implémenté dans des moyens de traitement (31) d'au moins un serveur (3) de gestion de la joignabilité des appelés (A1), dit serveur (3) de joignabilité, contrôle(nt) un enregistrement, selon des choix de l'appelé, d'au moins certaines données, dites données (DJ) de joignabilité, parmi des données représentatives d'au moins un numéro unique (1ID), d'au moins un profil (P) comprenant des données représentatives d'identifiants (FQDN) de communication de l'appelé (A1) triés selon un ordre de préférence et d'au moins un agenda (A) comprenant des données représentatives de tranches horaires (TH) et de paramètres relatifs à l'activation du (ou des) profil(s) (P) pendant les tranches horaires (TH), ces données (DJ) de joignabilité permettant la mise à jour des données d'au moins une base (DB_ENUM) de données, dite centralisée, d'au moins un serveur (4) de centralisation, accessible via au moins un réseau (RC) de communication et stockant des données relatives à une pluralité d'appelés (A1), au moins un équipement (5) opérateur contrôlant les transmissions de données des appelés et des appelants au sein d'au moins un réseau (RC) de communication en fonction des données (DJ) de joignabilité.

## Description

La présente invention concerne le domaine des communications électroniques en général. En effet, l'invention concerne l'ensemble des communications électroniques reposant sur différents média de communication tels que la téléphonie (les téléphones fixes) ou la téléphonie mobile, ainsi que les différents média de communication supportés par les réseaux de type Internet. Les réseaux de type Internet sont désormais accessibles, entre autres, via les réseaux de téléphonie mobile et offrent de nombreux outils de communication, tels que la navigation Internet classique mais également, par exemple, les messageries électroniques (e-mail, selon la terminologie anglaise, ou courriel, selon la terminologie française), les blogs et les forums, ou les messageries instantanées. Les messageries instantanées, tels que, par exemple, les messageries SIP (« Session Initiation Protocol » selon la terminologie anglaise) ou les messageries MSN® ou Windows Live Messenger® ou encore Skype®, permettent aux utilisateurs de dialoguer par des messages en texte (« chat », selon la terminologie classiquement utilisée dans le domaine) en direct par Internet et permettent également aux utilisateurs de faire des vidéo conférences ou simplement de tenir des conversations vocales par Internet (appelées selon la terminologie anglaise VoIP, pour « Voice Over IP », l'abréviation IP signifiant « Internet Protocol »). Tous ces moyens de communications sont désormais accessibles à partir de différents types de terminaux communicants, notamment grâce à l'évolution des réseaux de communication déployés par les opérateurs de communication. Ces terminaux communicants peuvent donc consister aujourd'hui en n'importe quel type de terminal électronique comportant des moyens de traitement de données suffisamment puissants pour supporter les différentes applications et des moyens de communication via au moins un réseau de communication. Par exemple, on peut aujourd'hui communiquer sur tous ces média à partir d'un téléphone mobile, notamment de 3° génération, d'un ordinateur, d'un assistant personnel (PDA, pour l'anglais « Personal Digital Assistant »), munis de moyens de communication via au moins un réseau de communication, etc. Ainsi, les utilisateurs de tous ces moyens de communication modernes possèdent en général plusieurs identifiants de communication, c'est-à-dire des numéros de téléphone (fixe et/ou mobile), des adresses email, des identifiants de messagerie, voire des noms de domaine ou des adresses de liens pour leurs blogs etc.

Un premier inconvénient dans ce domaine en plein développement des communications électroniques modernes concerne justement le fait que chacun des utilisateurs possède de nombreux identifiants de communication que leurs correspondants doivent connaître pour pouvoir les joindre sur les différents média de communication.

Un second inconvénient concerne le fait que les identifiants de communication d'un utilisateur peuvent changer au cours du temps (par exemple lorsqu'il change d'opérateur) et que ses correspondants n'en sont pas forcément avertis ou que l'utilisateur doive les avertir, ce qui s'avère souvent problématique et au moins laborieux. Une solution, connue sous le nom « ENUM » (pour l'anglais « tElephone NUmber Mapping ») et définie dans la norme RFC 2916 de l'IETF (pour l'anglais « Request For Comment » du détachement d'ingénierie Internet ou « Internet Engineering Task Force » selon la terminologie anglaise), consiste en ce que chaque utilisateur ait un numéro principal, dit numéro unique, appelé «e164» dans les recommandations de l'union Internationale des Télécommunications (UIT, ou ITU pour l'anglais « International Telecommunication Union »). Ce numéro unique, appelé « ENUM » ci-après, sera, à terme, utilisé pour toutes les communications électroniques quel que soit le média, de façon à simplifier l'utilisation des moyens modernes de communication. Ce numéro unique « e164 » ou « ENUM » est enregistré dans une base de données, accessible selon le système des noms de domaine (DNS, pour l'anglais « Domain Name System) grâce auquel un identifiant d'adresse Internet (tel qu'une adresse IP) est associé à un nom de domaine plus facile à retenir (cette corrélation entre les adresses IP et les noms de domaine associés étant appelée « résolution des noms de domaine »). Les identifiants de communication utilisés dans le système DNS sont, quelque soit le média et la technologie utilisés, regroupés sous le terme de « Nom de Domaine totalement qualifié » (FQDN, pour l'anglais « Fully Qualified Domain Name »). Ils pourront, selon la technologie, le média et le protocole utilisés, consister en des numéros de téléphone (par exemple les « teIURI », pour « telephone Universal Resource Identifier » de la RFC 3966 désignant les identifiants de communication téléphonique), des adresses mails, ou des identifiants Internet tels que les URI (pour l'anglais « Uniform Resource Identifier »), ou même les URL (pour l'anglais « Uniform Resource Locator ») ou les URN (pour l'anglais « Uniform Resource Name ») pour autant que les adressages soient résolus. Ainsi, le système ENUM permet d'associer une pluralité d'identifiants de communication à un seul et unique numéro. Pour cela, le numéro unique, défini dans la norme comme une clé de recherche dénommée « e164 » et inscrit auprès de l'ITU (pour éviter que deux utilisateurs aient des numéros identiques), consiste en un numéro de téléphone auquel on ajoute le code du pays, dans lequel on insère un point (.) entre chaque caractère et dont on inverse la séquence avant d'y ajouter le suffixe « e164.arpa » indiquant la racine des noms de domaine du système ENUM. Ainsi, ce numéro permet d'établir une requête DNS, appelée requête NAPTR (pour l'anglais « eNum Authority PoinTeR ») pour obtenir du serveur DNS contenant la base de données une réponse, appelée NAPTR_RR (pour l'anglais « eNum Authority PoinTeR Resource Record »), contenant tous les identifiants de communication de l'utilisateur de ce numéro. La norme d'aujourd'hui définit d'autres champs dans les requêtes NAPTR, notamment pour l'ordre de présentation des identifiants de communication et la norme RFC 3953 définit une gestion de la présence de l'utilisateur. Cependant, la norme ne prévoit pas d'utilisation de ces champs supplémentaires ni de réelle gestion de la présence puisque l'utilisateur est considéré comme étant joignable sur n'importe lequel des média correspondant à ses identifiants de communication et le système ne permet pas de savoir sur quel média l'utilisateur est présent.

Un troisième inconvénient dans ce domaine, lié aux inconvénients et problèmes précédents et non résolu par cette solution ENUM, concerne la joignabilité de l'utilisateur sur au moins un terminal communicant, via au moins un média de communication. En effet, le système ENUM permet de connaître tous les identifiants d'un utilisateur mais ne permet pas de savoir, à un instant donné, sur lequel il est joignable ou sur lequel il souhaite être joint.

Un quatrième inconvénient, également lié aux inconvénients et problèmes précédents et non résolu (voire engendré) par la solution ENUM, concerne la confidentialité des identifiants de communication d'un utilisateur. En effet, il se peut qu'un utilisateur qui fournit un de ses identifiants à un correspondant (un contact), ne souhaite pas que ce dernier ait accès à tous ses identifiants de communication.

Un cinquième inconvénient, également lié aux inconvénients et problèmes précédents et non résolu (voire engendré) par la solution ENUM, concerne le fait qu'un utilisateur cherchant à joindre un correspondant reçoit une liste d'identifiants de communication dont certains ne sont pas compatibles avec le terminal (ou le média) utilisé par ce correspondant pour joindre l'utilisateur.

Un sixième inconvénient, également lié aux inconvénients et problèmes précédents et non résolu (voire engendré) par la solution ENUM, concerne le fait que les requêtes d'obtention des identifiants de communication classiquement utilisées dans les systèmes DNS sont envoyées via des ports de communication qui sont très souvent bloqués par les systèmes de protection tels que les pare-feus (« Fire-Wall », selon la terminologie anglaise). Ainsi, l'utilisateur qui souhaite obtenir les identifiants d'un de ses correspondants n'arrive pas forcément à envoyer de requête, par exemple de type NAPTR, directement au serveur, selon la configuration de son terminal et/ou du réseau local dans lequel il se trouve.

Dans ce contexte, il est intéressant de proposer une solution permettant à la fois de simplifier l'utilisation des différents média de communication et de permettre une gestion de la joignabilité des utilisateurs, en garantissant éventuellement une confidentialité des identifiants de communication et en assurant éventuellement une compatibilité entre les média utilisables par les correspondants en permettant leur mise en relation.

Un premier but de la présente invention est donc de supprimer certains inconvénients de l'art antérieur en proposant un système de gestion de la joignabilité d'au moins un utilisateur via au moins un réseau de communication, permettant au moins à cet utilisateur de choisir les media de communication sur lesquels il souhaite être joint en fonction du temps.

Ce but est atteint par un système de gestion de la joignabilité d'au moins un utilisateur, dit appelé, sur au moins un terminal communicant, dit terminal appelé, via au moins un réseau de communication, pour la joignabilité de l'appelé par au moins un utilisateur, dit appelant, sur au moins un terminal communicant, dit terminal appelant, le système comportant :
- au moins un serveur de centralisation, accessible via le(s) réseau(x) de communication et comprenant au moins une base de données, dite centralisée, stockant des données relatives à une pluralité d'appelés, ces données comportant, pour chaque appelé, un identifiant principal, dit numéro unique, associé à au moins un identifiant de communication,
le système étant caractérisé en ce qu'il comporte :
- au moins un terminal appelé, comportant des moyens de communication via le(s) réseau(x) de communication, des moyens de traitement de données, des moyens interactifs pour le contrôle du terminal communicant par l'appelé et des moyens de mémorisation,
- au moins un module de gestion, dit module de gestion serveur, implémenté dans des moyens de traitement d'au moins un serveur de gestion de la joignabilité des appelés, dit serveur de joignabilité, comportant des moyens de communication le rendant accessible via le(s) réseau(x) de communication, le module de gestion serveur contrôlant :
   - un enregistrement dans des moyens de mémorisation du serveur de joignabilité, d'au moins certaines données, dites données de joignabilité, parmi des données représentatives d'au moins un numéro unique, d'au moins un profil comprenant des données représentatives d'identifiants de communication de l'appelé triés selon un ordre de préférence et d'au moins un agenda comprenant des données représentatives de tranches horaires et de paramètres relatifs à l'activation du profil(s) pendant les tranches horaires, les données représentatives de l'ordre de préférence, des tranches horaires et de l'activation du profil étant déterminées par l'appelé grâce au module de gestion et aux moyens interactifs de son terminal communicant,
   - une mise à jour des données stockées dans la base de données centralisée du serveur de centralisation, à partir des données de joignabilité enregistrées dans les moyens de mémorisation du serveur de joignabilité, lors d'un changement par l'appelé d'au moins une des données de joignabilité et/ou au cours du temps, lors du passage d'une tranche horaire à une autre.
- au moins un équipement opérateur comportant des moyens de transmission de données pour l'établissement de communications via le(s) réseau(x) de communication, des moyens de redirection de transmission de données et au moins une base de données, dite base de données utilisateurs, stockant des données identifiant les utilisateurs qui possèdent des données de joignabilité, les moyens de redirection consultant cette base de données utilisateurs pour rediriger, au sein du(des) réseau(x) de communication, les transmissions de données entre les serveurs et/ou les terminaux du système.

Selon une autre particularité, les moyens de mémorisation du serveur de joignabilité comportent au moins une base de données, dite de joignabilité, stockant des données relatives à une pluralité d'appelés, ces données comportant des données de joignabilité de chacun des appelés, gérées par le module de gestion serveur générant des données compatibles avec les moyens de traitement du terminal appelé, ces données compatibles comportant au moins un type de données parmi les données de joignabilité, le module de gestion contrôlant les moyens de communication du serveur de joignabilité pour des transmissions, avec le terminal appelé, de ces données compatibles générées, ces transmissions permettant la sélection, par l'appelé, grâce aux moyens de traitement et aux moyens interactifs de son terminal appelé, des données à enregistrer dans la base de données de joignabilité du serveur de joignabilité, le module de gestion serveur générant également des données compatibles avec le serveur de centralisation, pour la mise à jour de la base de données du serveur de centralisation à partir de la base de données de joignabilité.

Selon une autre particularité, les moyens de traitement de données du terminal appelé comportent également un module de gestion, dit module de gestion appelé, complémentaire du module de gestion serveur, les moyens de mémorisation du terminal appelé stockant au moins un type de données parmi les données de joignabilité de l'appelé, le module de gestion appelé et le module de gestion serveur s'échangeant, via le(s) réseau(x) de communication, des données comportant au moins un type de données parmi les données de joignabilité, pour l'enregistrement, dans la base de données de joignabilité, des données représentatives des identifiants de communication de l'appelé et/ou de son numéro unique et/ou de son profil et/ou de son agenda, sélectionnées par l'appelé sur le terminal appelé, le module de gestion serveur générant également des données compatibles avec le serveur de centralisation, pour la mise à jour de la base de données du serveur de centralisation à partir de la base de données de joignabilité.

Selon une autre particularité, le module de gestion serveur contrôle les moyens de communication pour l'envoi, vers le terminal appelé, des données représentatives des identifiants de communication de l'appelé et/ou de son numéro unique et/ou de son profil et/ou de son agenda, lorsque ces données sont absentes des moyens de mémorisation du terminal appelé et/ou lorsque le module de gestion appelé le requiert.

Selon une autre particularité, le module de gestion appelé contrôle les moyens de communication du terminal appelé pour l'envoi des données de joignabilité sélectionnées par l'appelé vers le module de gestion serveur.

Selon une autre particularité, le serveur de joignabilité et le serveur de centralisation constituent un seul et même serveur comportant les deux bases de données, ainsi que des moyens de traitement de données et des moyens de communication spécifiques à ces deux serveurs.

Selon une autre particularité, le module de gestion serveur contrôle les moyens de communication du serveur de joignabilité pour la mise à jour de la base de données du serveur de centralisation.

Selon une autre particularité, les moyens de traitement de données du serveur de joignabilité comportent également des moyens d'authentification pour identifier les appelés enregistrant des données de joignabilité dans la base de données du serveur de joignabilité et limiter l'accès au module de gestion à des appelés préalablement enregistrés auprès de gestionnaires du serveur de joignabilité.

Selon une autre particularité, les données stockées dans la base de données de joignabilité comporte également des données relatives à des paramètres de confidentialité du numéro unique et des identifiants de communication de l'appelé, ces données permettant aux appelés de définir les appelants autorisés à obtenir leurs données de joignabilité et/ou de définir quelles données ils sont autorisés à obtenir parmi ces données de joignabilité.

Selon une autre particularité, les moyens de redirection de l'équipement opérateur, lorsqu'un appelant requiert l'établissement d'une communication avec un appelé via le(s) réseau(x) de communication, permettent soit au terminal appelant de consulter la base de données centralisée, soit au serveur de joignabilité de consulter la base de données centralisée, soit au module de gestion serveur de consulter la base de données de joignabilité.

Selon une autre particularité, les moyens de traitement de données du serveur de joignabilité comportent également des moyens d'authentification pour identifier les appelants pour lesquels la base de données centralisée ou la base de données de joignabilité est consultée et limiter l'accès à des appelants préalablement enregistrés par les appelés dans les paramètres de confidentialité, comme étant autorisés à obtenir au moins une partie de leurs données de joignabilité.

Selon une autre particularité, le serveur de centralisation comporte des moyens d'authentification des serveurs de joignabilité dont le module met à jour la base de données centralisée, de façon à limiter l'accès à des serveurs de joignabilité préalablement enregistrés auprès de gestionnaires du serveur de centralisation.

Selon une autre particularité, le serveur de joignabilité est implémenté dans l'équipement opérateur.

Selon une autre particularité, le serveur de centralisation est implémenté dans l'équipement opérateur.

Selon une autre particularité, les moyens de transmission de données et/ou les moyens de redirection de l'équipement opérateur supportent au moins un média de communication, fonctionnant selon au moins un protocole de communication, le(s) média supporté(s) consistant en au moins un média parmi les suivants :
- Internet,
- messagerie électronique,
- messagerie électronique instantanée,
- téléphonie,
- téléphonie mobile.

Selon une autre particularité, l'équipement opérateur comporte une base de données stockant les serveurs de centralisation correspondant à une pluralité d'appelés, cette base de données étant consultée par les moyens de redirection, lorsque des moyens de communication d'au moins un terminal appelant envoient, vers au moins un serveur de centralisation, une requête d'obtention des identifiants de communication d'un appelé erronée ou incomplète ou inadaptée au(x) réseau(x), pour identifier, en fonction de l'appelé, le serveur de centralisation vers lequel cette requête doit être envoyée et rediriger cette requête d'obtention des identifiants de communication vers ce serveur identifié.

Selon une autre particularité, les moyens de redirection de l'équipement opérateur sont activés lorsque des moyens de communication d'au moins un terminal appelant envoient une requête d'établissement d'une communication vers les moyens de transmission de données de l'équipement opérateur, pour joindre au moins un appelé sur au moins un terminal appelé et communiquer avec ce terminal appelé via le(s) réseau(x) de communication, les moyens de redirection consultant alors la base de données utilisateurs, pour envoyer une requête d'obtention des identifiants de communication d'un appelé :
- vers le serveur de centralisation pour consultation de la base de données centralisée, lorsque l'appelé est identifié comme n'étant pas enregistré dans cette base de données utilisateurs, ou
- vers le serveur de joignabilité pour consultation de la base de données de joignabilité, lorsque l'appelé est identifié comme étant enregistré dans cette base de données utilisateurs.

Selon une autre particularité, les moyens de redirection de l'équipement opérateur sont activés lorsque des moyens de communication d'au moins un terminal appelant envoient une requête d'obtention des identifiants de communication d'un appelé, pour obtenir les identifiants de l'appelé, les moyens de redirection consultant alors la base de données utilisateurs, pour transmettre cette requête :
- vers le serveur de centralisation pour consultation de la base de données centralisée, lorsque l'appelé est identifié comme n'étant pas enregistré dans cette base de données utilisateurs, ou
- vers le serveur de joignabilité pour consultation de la base de données de joignabilité ou pour consultation de la base de données centralisée par le serveur de joignabilité, lorsque l'appelé est identifié comme étant enregistré dans cette base de données utilisateurs.

Selon une autre particularité, les moyens de redirection des communications sont également implémentés dans d'autres équipements opérateurs que l'équipement opérateur du système, de façon à permettre une interopérabilité entre les différents opérateurs de communication.

Selon une autre particularité, le serveur de centralisation comporte :
- des moyens de communication, via le(s) réseau(x) de communication, pour la réception de requêtes d'obtention des identifiants de communication d'un appelé identifié par son numéro unique, pour l'envoi d'une réponse comprenant une liste d'identifiants de communication correspondant au numéro unique de l'appelé et pour la réception de mises à jour de la base de données centralisée à partir de la base de données de joignabilité,
- des moyens de traitement de données pour le traitement des requêtes d'obtention d'identifiants, l'identification du numéro unique de l'appelé et l'élaboration de la réponse comprenant la liste d'identifiants correspondants.

Selon une autre particularité, d'une part, les moyens de communication du serveur de joignabilité sont également agencés pour la réception de requêtes d'obtention des identifiants de communication d'un appelé identifié par son numéro unique, l'envoi d'une réponse comprenant au moins une liste d'identifiants de communication correspondant au numéro unique de l'appelé et, d'autre part, les moyens de traitement du serveur de joignabilité sont également agencés pour le traitement des requêtes d'obtention d'identifiants, l'identification du numéro unique de l'appelé et l'élaboration de la réponse comprenant au moins la liste d'identifiants correspondant à cet appelé.

Selon une autre particularité, le système comporte également au moins un terminal appelant, comportant :
- des moyens de communication via le(s) réseau(x) de communication pour joindre au moins un appelé sur au moins un terminal appelé, grâce à des requêtes d'établissement de communication, et communiquer avec ce terminal appelé au travers d'au moins un média, et/ou pour envoyer des requêtes d'obtention des identifiants de communication d'un appelé directement vers le serveur de joignabilité et/ou le serveur de centralisation et pour recevoir des réponses contenant des listes d'identifiants de communication,
- des moyens de traitement de données comportant un module de gestion, dit module de gestion appelant, comportant un lanceur d'application gérant les moyens de communication pour sélectionner le média correspondant à l'identifiant de communication prioritaire dans une liste reçue.

Selon une autre particularité, le module de gestion appelant, gère au moins un numéro unique et/ou au moins un identifiant de communication, correspondant à au moins un appelé et mémorisé(s) dans des moyens de mémorisation du terminal appelant.

Selon une autre particularité, le module de gestion serveur, activé lors de la consultation de la base de données centralisée ou de la consultation de la base de données de joignabilité, d'une part, est également agencé pour la réception et/ou le traitement de la réponse contenant la liste d'identifiants de communication de l'appelé et, d'autre part, comporte un lanceur d'application agencé pour rediriger la communication, via l'équipement opérateur, sur un média correspondant à l'identifiant de communication prioritaire dans le profil activé au cours de la tranche horaire à laquelle l'appelant a requis une communication, lorsque le terminal appelant est compatible avec ce média.

Selon une autre particularité, le lanceur d'application du serveur de joignabilité comporte des moyens de conversion de média, activés lorsque, d'une part, le terminal appelant, émetteur de la requête d'établissement d'une communication, utilise un média différent de celui correspondant à l'identifiant de communication prioritaire dans le profil activé au cours de la tranche horaire à laquelle a lieu la requête d'établissement d'une communication par le terminal appelant et, d'autre part, le terminal appelant n'est pas compatible avec ce média, de façon à convertir les données transmises par le terminal appelant en données compatibles avec ce média.

Un second but de la présente invention est donc de supprimer certains inconvénients de l'art antérieur en proposant un procédé de gestion de la joignabilité d'au moins un utilisateur via au moins un réseau de communication, permettant au moins à cet utilisateur de choisir les media de communication sur lesquels il souhaite être joint en fonction du temps.

Ce but est atteint par un procédé de gestion de la joignabilité d'au moins un utilisateur, dit appelé, sur au moins un terminal communicant, dit terminal appelé, via au moins un réseau de communication, pour la joignabilité de l'appelé par au moins un utilisateur, dit appelant, sur au moins un terminal communicant, dit terminal appelant, mis en oeuvre par un système comportant :
- au moins un terminal appelé comportant des moyens de communication via le(s) réseau(x) de communication, des moyens de traitement de données, des moyens interactifs pour le contrôle du terminal communicant par l'appelé et des moyens de mémorisation,
- au moins un serveur de centralisation, accessible via le(s) réseau(x) de communication et comprenant au moins une base de données, dite centralisée, stockant des données relatives à une pluralité d'appelés, ces données comportant, pour chaque appelé, un identifiant principal, dit numéro unique, associé à au moins un identifiant de communication,
- au moins un module de gestion, dit module de gestion serveur, implémenté dans des moyens de traitement d'au moins un serveur de gestion de la joignabilité des appelés, dit serveur de joignabilité, comportant des moyens de communication le rendant accessible via le(s) réseau(x) de communication,
le procédé étant caractérisé en ce qu'il comporte les étapes suivantes :
- enregistrement, par le module de gestion, dans des moyens de mémorisation du serveur de joignabilité, d'au moins certaines données, dites données de joignabilité, parmi des données représentatives d'au moins un numéro unique, d'au moins un profil comprenant des données représentatives d'identifiants de communication de l'appelé triés selon un ordre de préférence et d'au moins un agenda comprenant des données représentatives de tranches horaires et de paramètres relatifs à l'activation du profil(s) pendant les tranches horaires, les données représentatives de l'ordre de préférence, des tranches horaires et de l'activation du profil étant déterminées par l'appelé grâce au module de gestion et aux moyens interactifs de son terminal communicant,
- mise à jour, par le module de gestion, des données stockées dans la base de données centralisée du serveur de centralisation, à partir des données de joignabilité enregistrées dans les moyens de mémorisation du serveur de gestion, lors d'un changement par l'appelé d'au moins une des données de joignabilité et/ou au cours du temps, lors du passage d'une tranche horaire à une autre
- consultation, par au moins un équipement opérateur, d'au moins une base de données de l'équipement opérateur, dite base de données utilisateurs, stockant des données identifiant les utilisateurs qui possèdent des données de joignabilité, suivie d'au moins une étape de redirection de transmissions de données entre les serveurs et/ou les terminaux du système, par des moyens de redirection de transmission de données de l'équipement opérateur, pour l'établissement de communications via le(s) réseau(x) de communication, par des moyens de transmission de données de l'équipement opérateur.

Selon une autre particularité, les moyens de mémorisation du serveur de gestion comportent au moins une base de données, dite de joignabilité, stockant des données relatives à une pluralité d'appelés, ces données comportant des données de joignabilité de chacun des appelés, gérées par le module de gestion serveur de gestion, ce dernier permettant la mise en oeuvre des étapes suivantes :
- création, par le module de gestion serveur, de données compatibles avec les moyens de traitement du terminal appelé et comportant au moins un type de données parmi les données de joignabilité,
- transmission de ces données compatibles générées vers le terminal appelé, via le(s) réseau(x) de communication,
- sélection parmi les données transmises, par l'appelé, grâce aux moyens de traitement et aux moyens interactifs de son terminal appelé, des données à enregistrer dans la base de données de joignabilité du serveur de gestion,
- transmission des données sélectionnées par le terminal appelé vers le module de gestion serveur, via le(s) réseau(x) de communication, puis enregistrement, par le module de gestion serveur, de ces données dans la base de données du serveur de joignabilité,
- création, par le module de gestion serveur, de données compatibles avec le serveur de centralisation, pour la mise à jour de la base de données du serveur de centralisation à partir de la base de données de joignabilité.

Selon une autre particularité, les moyens de mémorisation du serveur de gestion comportent au moins une base de données, dite de joignabilité, stockant des données relatives à une pluralité d'appelés, ces données comportant des données de joignabilité de chacun des appelés, gérées par le module de gestion serveur, les moyens de mémorisation du terminal appelé stockant au moins un type de données parmi les données de joignabilité de l'appelé, les moyens de traitement du terminal appelé comportant également un module de gestion, appelé module de gestion appelé, complémentaire du module de gestion serveur, le module de gestion appelé et le module de gestion serveur permettant la mise en oeuvre des étapes suivantes :
- sélection par l'appelé, grâce au module de gestion appelé contrôlant les moyens interactifs et les moyens de mémorisation de son terminal appelé, parmi les données de joignabilité stockées dans les moyens de mémorisation du terminal appelé, des données à enregistrer dans la base de données de joignabilité du serveur de gestion,
- transmission des données sélectionnées par le terminal appelé vers le module de gestion serveur, via le(s) réseau(x) de communication, puis enregistrement, par le module de gestion serveur, de ces données dans la base de données du serveur de joignabilité,
- création, par le module de gestion serveur, de données compatibles avec le serveur de centralisation, pour la mise à jour de la base de données du serveur de centralisation à partir de la base de données de joignabilité.

Selon une autre particularité, le procédé comporte une étape d'envoi, par les moyens de communication du serveur de joignabilité, vers le terminal appelé, des données représentatives des identifiants de communication de l'appelé et/ou de son numéro unique et/ou de son profil et/ou de son agenda, lorsque le terminal appelé ne stocke pas ces données et/ou lorsque le module de gestion appelé le requiert.

Selon une autre particularité, le procédé comporte une étape d'implémentation, dans un serveur, des deux bases de données, ainsi que des moyens de traitement de données et des moyens de communication spécifiques du serveur de joignabilité et du serveur de centralisation qui constituent alors un seul et même serveur, l'étape de création de données compatibles avec le serveur de centralisation consistant alors en une conversion d'au moins une partie des données de la base de données de joignabilité en données de la base de données et l'étape de mise à jour de la base de données du serveur de centralisation consistant en un enregistrement de ces données converties dans la base de données.

Selon une autre particularité, l'étape de mise à jour comporte une étape de transmission, via le(s) réseau(x) de communication, de données représentatives des identifiants de communication de l'appelé et/ou de son numéro unique, par le module de gestion serveur vers des moyens de communication du serveur de centralisation.

Selon une autre particularité, l'étape de transmission de données pour l'enregistrement dans la base de données de joignabilité comporte une étape d'authentification de l'appelé accédant au serveur de joignabilité, par des moyens d'authentification présents dans les moyens de traitement de données du serveur de joignabilité, de façon à limiter l'accès à des appelés préalablement enregistrés auprès de gestionnaires du serveur de joignabilité au cours d'une étape préalable de déclaration des appelés.

Selon une autre particularité, l'étape d'enregistrement du profil dans la base de données de joignabilité comporte également une étape d'enregistrement de données relatives à des paramètres de confidentialité du numéro unique et des identifiants de communication de l'appelé, ces données permettant aux appelés de définir les appelants autorisés à obtenir leurs données de joignabilité et/ou de définir quelles données ils sont autorisés à obtenir parmi ces données de joignabilité.

Selon une autre particularité, le procédé comporte au moins une étape des étapes suivantes, mise en oeuvre lorsqu'un appelant requiert l'établissement d'une communication avec un appelé via le(s) réseau(x) de communication :
- consultation de la base de données centralisée par un terminal appelant,
- consultation de la base de données centralisée par le serveur de joignabilité,
- consultation de la base de données de joignabilité par le module de gestion serveur.

Selon une autre particularité, l'étape de consultation de la base de données centralisée ou l'étape de consultation de la base de données de joignabilité est précédée d'une étape d'authentification des appelants ayant requis l'établissement d'une communication, par des moyens d'authentification présents dans les moyens de traitement de données du serveur de joignabilité, de façon à limiter l'accès à des appelants préalablement enregistrés par les appelés, lors de l'étape d'enregistrement des paramètres de confidentialité, comme étant autorisés à obtenir au moins une partie de leurs données de joignabilité.

Selon une autre particularité, l'étape de transmission de données pour la mise à jour de la base de données centralisée comporte une étape d'authentification du serveur de joignabilité, par des moyens d'authentification du serveur de centralisation, de façon à limiter l'accès à des serveurs de joignabilité préalablement enregistrés auprès de gestionnaires du serveur de centralisation au cours d'une étape préalable de déclaration des serveurs de joignabilité.

Selon une autre particularité, le procédé comporte une étape d'implémentation du serveur de joignabilité dans l'équipement opérateur.

Selon une autre particularité, le procédé comporte une étape d'implémentation du serveur de centralisation dans l'équipement opérateur.

Selon une autre particularité, l'étape d'établissement d'une communication via le(s) réseau(x) de communication, grâce aux moyens de transmission de données de l'équipement opérateur, comporte au moins une étape de transmission de données sur au moins un média de communication, fonctionnant selon au moins un protocole de communication, le(s) média supporté(s) consistant en au moins un média parmi les suivants :
- Internet,
- messagerie électronique,
- messagerie électronique instantanée,
- téléphonie,
- téléphonie mobile.

Selon une autre particularité, lorsqu'un appelant requiert l'établissement d'une communication avec un appelé, via le(s) réseau(x) de communication, des moyens de communication d'au moins un terminal appelant que cet appelant utilise mettent en oeuvre une étape d'envoi, via le(s) réseau(x) de communication, vers au moins un équipement opérateur, d'une requête d'établissement d'une communication, pour joindre au moins un appelé sur au moins un terminal appelé et communiquer avec ce terminal appelé.

Selon une autre particularité, l'étape d'envoi de la requête d'établissement d'une communication s'accompagne de l'étape de consultation, par l'équipement opérateur, de la base de données utilisateurs de l'équipement opérateur, puis, lorsque l'appelé est identifié comme n'étant pas enregistré dans cette base de données utilisateurs, d'une étape de redirection, par les moyens de redirection de l'équipement opérateur, cette redirection comportant une étape d'envoi d'une requête d'obtention des identifiants de communication d'un appelé, vers le serveur de centralisation, pour consultation de la base de données centralisée.

Selon une autre particularité, l'étape d'envoi de la requête d'établissement d'une communication s'accompagne de l'étape de consultation, par l'équipement opérateur, de la base de données utilisateurs de l'équipement opérateur, puis, lorsque l'appelé est identifié comme étant enregistré dans cette base de données utilisateurs, d'une étape de redirection, par les moyens de redirection de l'équipement opérateur, de cette requête vers le serveur de joignabilité, pour consultation de la base de données centralisée par le module de gestion serveur ou pour consultation de la base de données de joignabilité par le module de gestion serveur.

Selon une autre particularité, lorsqu'un appelant requiert l'établissement d'une communication avec un appelé, via le(s) réseau(x) de communication, des moyens de communication d'au moins un terminal appelant que cet appelant utilise mettent en oeuvre une étape d'envoi, via le(s) réseau(x) de communication, vers au moins un serveur de centralisation, d'une requête d'obtention des identifiants de communication d'un appelé, pour obtenir les identifiants de l'appelé.

Selon une autre particularité, l'étape d'envoi d'une requête d'obtention des identifiants de communication d'un appelé, vers au moins un serveur de centralisation, s'accompagne, lorsque cette requête est adressée de façon erronée ou incomplète ou inadaptée au(x) réseau(x), d'une étape de consultation, par les moyens de redirection de l'équipement opérateur, d'une base de données de l'équipement opérateur stockant les serveurs de centralisation correspondant à une pluralité d'appelés, pour identifier, en fonction de l'appelé, le serveur de centralisation vers lequel cette requête doit être envoyée, puis d'une étape de redirection, par les moyens de redirection de l'équipement opérateur, de cette requête d'obtention des identifiants de communication vers ce serveur identifié, pour consultation de sa base de données centralisée.

Selon une autre particularité, l'étape d'envoi de la requête d'obtention des identifiants de communication de l'appelé, s'accompagne de l'étape de consultation, par l'équipement opérateur, de la base de données utilisateurs de l'équipement opérateur, puis, lorsque l'appelé est identifié comme n'étant pas enregistré dans cette base de données utilisateurs, de l'étape de consultation de la base de données centralisée par le terminal appelant.

Selon une autre particularité, l'étape d'envoi de la requête d'obtention des identifiants de communication d'un appelé s'accompagne de l'étape de consultation, par l'équipement opérateur, de la base de données utilisateurs de l'équipement opérateur, puis, lorsque l'appelé est identifié comme étant enregistré dans cette base de données utilisateurs, d'une étape de redirection, par les moyens de redirection de l'équipement opérateur, de cette requête vers le serveur de joignabilité, pour consultation de la base de données centralisée par le module de gestion serveur ou pour consultation de la base de données de joignabilité par le module de gestion serveur.

Selon une autre particularité, les étapes de consultation de la base de données utilisateurs et de redirection sont mises en oeuvre par des équipements opérateurs autres que l'équipement opérateur du système et comportant au moins une base de données utilisateurs et des moyens de redirection de transmission de données, de façon à permettre une interopérabilité entre les différents opérateurs de communication.

Selon une autre particularité, l'étape de consultation de la base de données centralisée comporte les étapes suivantes :
- réception, par des moyens de communication du serveur de centralisation, via le(s) réseau(x) de communication, de la requête d'obtention des identifiants de communication d'un appelé identifié par son numéro unique,
- traitement de la requête d'obtention d'identifiants et identification du numéro unique de l'appelé dans la base de données centralisée, par des moyens de traitement de données du serveur de centralisation,
- élaboration d'une réponse comprenant la liste d'identifiants correspondants, cette liste étant automatiquement limitée en fonction des données de joignabilité, grâce à l'étape de mise à jour de la base de données centralisée,
- envoi, par les moyens de communication du serveur de centralisation, de la réponse comprenant une liste d'identifiants de communication correspondant au numéro unique de l'appelé.

Selon une autre particularité, l'étape de consultation de la base de données de joignabilité comporte les étapes suivantes:
- réception, par les moyens de communication du serveur de joignabilité, via le(s) réseau(x) de communication, de la requête d'obtention des identifiants de communication d'un appelé identifié par son numéro unique,
- traitement de la requête d'obtention d'identifiants et identification du numéro unique de l'appelé dans la base de données de joignabilité, par le module de gestion serveur,
- élaboration d'une réponse comprenant au moins la liste d'identifiants correspondants, cette liste étant automatiquement limitée en fonction des données de joignabilité, grâce à l'étape d'enregistrement des données de joignabilité,
- envoi, par les moyens de communication du serveur de joignabilité, de la réponse comprenant au moins une liste d'identifiants de communication correspondant au numéro unique de l'appelé.

Selon une autre particularité, l'étape de consultation de la base de données centralisée et/ou l'étape de consultation de la base de données de joignabilité est accompagnée(s) des étapes suivantes :
- réception par les moyens de communication du terminal appelant, de la réponse contenant la liste d'identifiants de communication de l'appelé,
- traitement, par le module de gestion appelant du terminal appelant, de la réponse contenant la liste d'identifiants de communication de l'appelé et démarrage d'une communication, par un lanceur d'application du module de gestion appelant, gérant les moyens de communication pour sélectionner le média correspondant à l'identifiant de communication prioritaire dans la liste reçue.

Selon une autre particularité, lorsque l'appelant requiert l'établissement d'une communication avec un appelé, cet appelé étant identifié par le module de gestion appelant, implémenté dans des moyens de traitement de données du terminal appelant, grâce à au moins un numéro unique et/ou au moins un identifiant de communication, mémorisé(s) dans des moyens de mémorisation du terminal appelant.

Selon une autre particularité, l'étape de consultation de la base de données centralisée par le serveur de joignabilité est accompagnée des étapes suivantes :
- réception et traitement, par le module de gestion serveur du serveur de joignabilité, de la réponse contenant la liste d'identifiants de communication de l'appelé,
- démarrage d'une communication, par un lanceur d'application du serveur de joignabilité, pour rediriger la communication, via l'équipement opérateur, sur un média correspondant à l'identifiant de communication prioritaire dans le profil activé au cours de la tranche horaire à laquelle a lieu la requête d'établissement d'une communication par le terminal appelant, lorsque le terminal appelant est compatible avec ce média.

Selon une autre particularité, l'étape de consultation de la base de données de joignabilité est accompagnée des étapes suivantes :
- traitement, par le module de gestion serveur du serveur de joignabilité, de la liste d'identifiants de communication de l'appelé,
- démarrage d'une communication, par un lanceur d'application du serveur de joignabilité, pour rediriger la communication, via l'équipement opérateur, sur un média correspondant à l'identifiant de communication prioritaire dans le profil activé au cours de la tranche horaire à laquelle a lieu la requête d'établissement d'une communication par le terminal appelant, lorsque le terminal appelant est compatible avec ce média

Selon une autre particularité, l'étape de démarrage de la communication, par le lanceur d'application, comporte une étape de conversion, par des moyens de conversion de média du serveur de joignabilité, activés lorsque, d'une part, le terminal appelant, émetteur de la requête d'établissement d'une communication, utilise un média différent de celui correspondant à l'identifiant de communication prioritaire dans le profil activé au cours de la tranche horaire à laquelle a lieu la requête d'établissement d'une communication par le terminal appelant et, d'autre part, le terminal appelant n'est pas compatible avec ce média, cette étape de conversion consistant à convertir les données transmises par le terminal appelant en données compatibles avec ce média.

D'autres particularités et avantages de la présente invention apparaîtront plus clairement à la lecture de la description ci-après, faite en référence aux dessins annexés, donnés à titre d'exemples non limitatifs, dans lesquels :

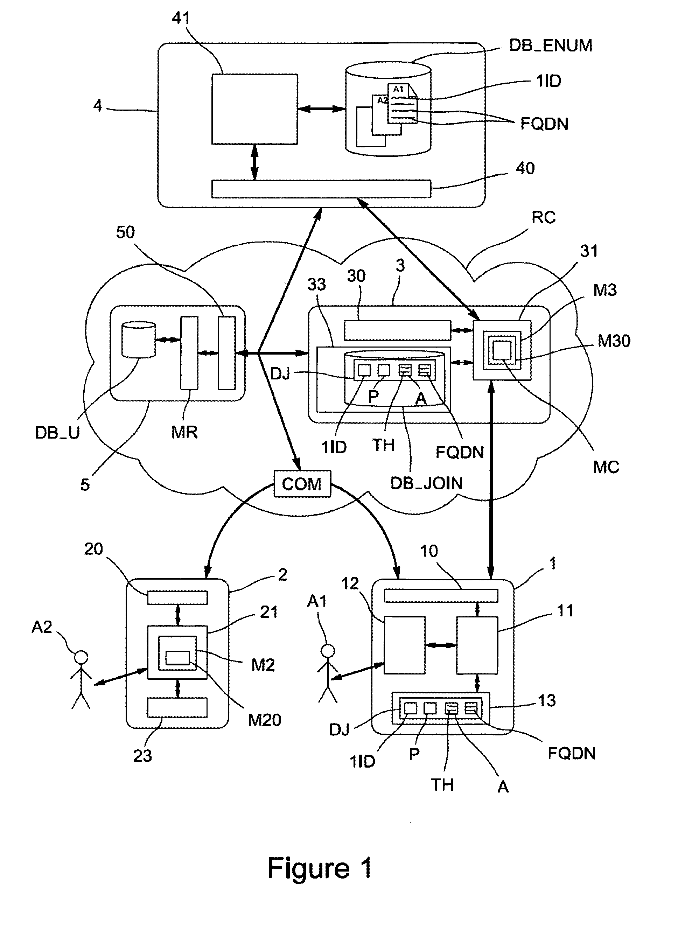

- la figure 1 représente le système selon un mode de réalisation de l'invention,
- la figure 2A représente la hiérarchie des systèmes de centralisation d'une solution connue de l'art antérieur et la figure 2B représente la conversion d'un numéro de téléphone en en identifiant principal, dit numéro unique, ainsi que l'association de ce dernier avec des identifiants de communication,
- la figure 3A représente un exemple d'une partie de profils et de sous-profils dans les données de joignabilité selon un mode de réalisation de l'invention et la figure 3B représente une partie d'un agenda dans les données de joignabilité selon un mode de réalisation de l'invention,

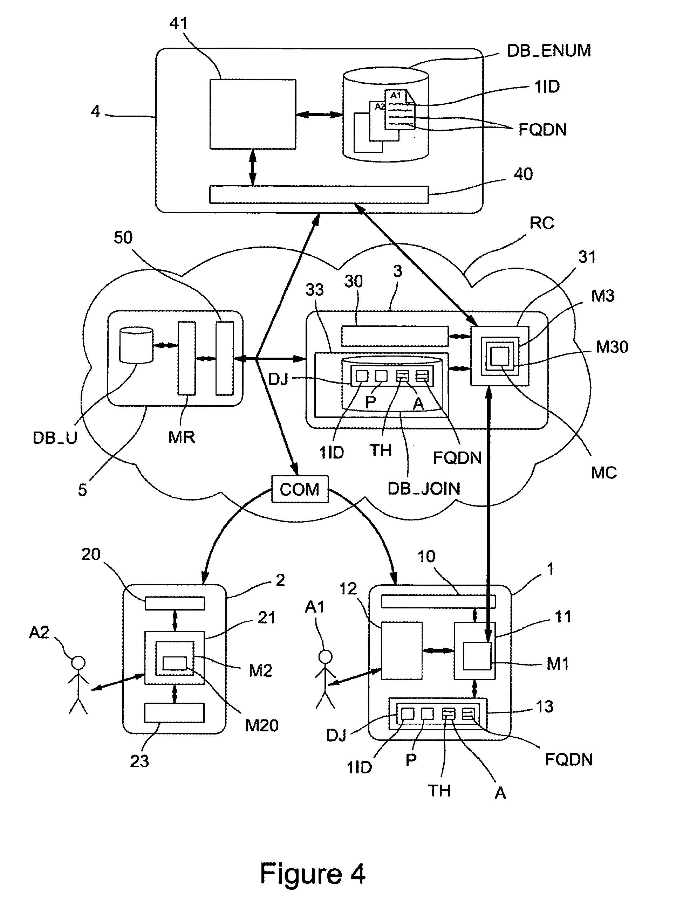

- la figure 4 représente le système selon un autre mode de réalisation de l'invention,

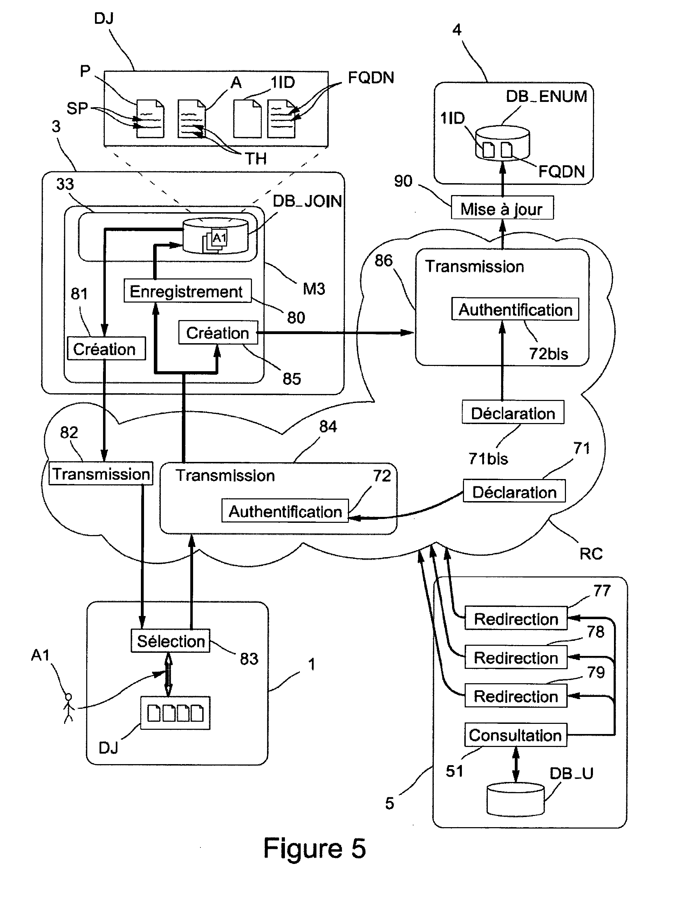

- la figure 5 représente les étapes principales du procédé selon un mode de réalisation de l'invention, mises en oeuvre par le système de la figure 1,

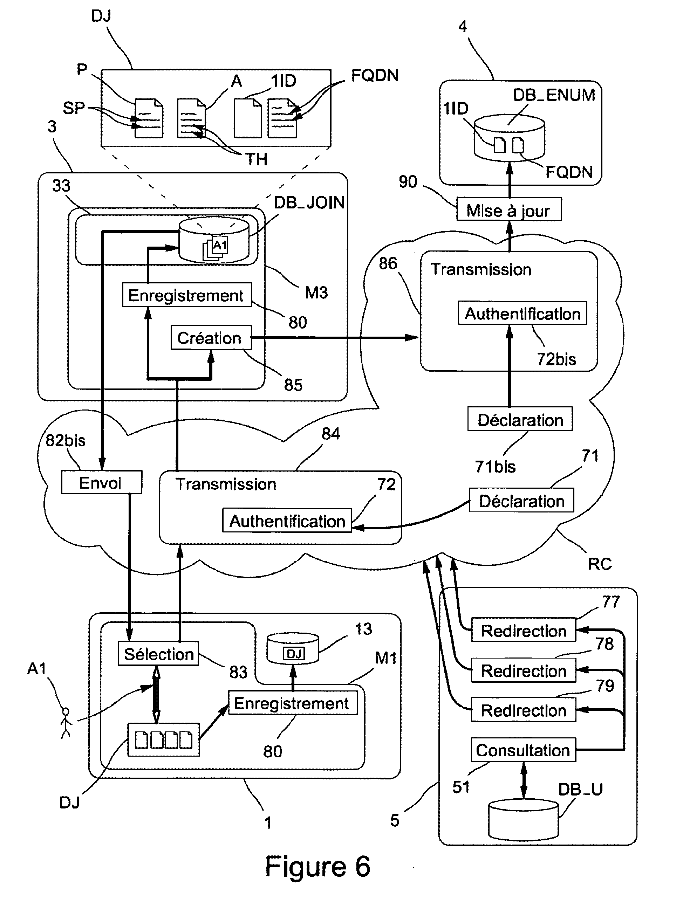

- la figure 6 représente les étapes principales du procédé selon un mode de réalisation de l'invention, mises en oeuvre par le système de la figure 4,

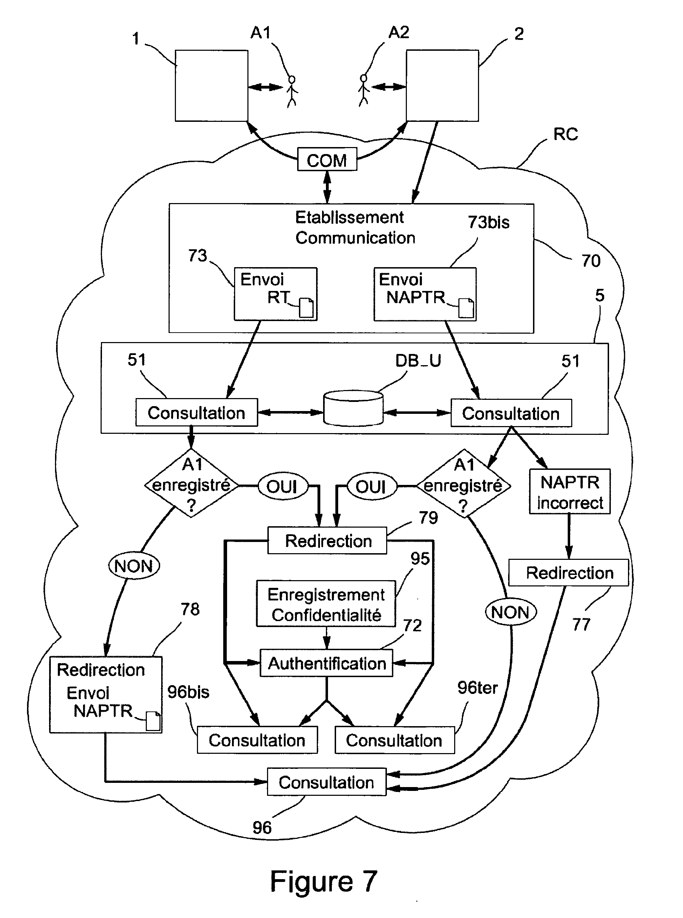

- la figure 7 représente une partie des étapes du procédé selon un mode de réalisation de l'invention,

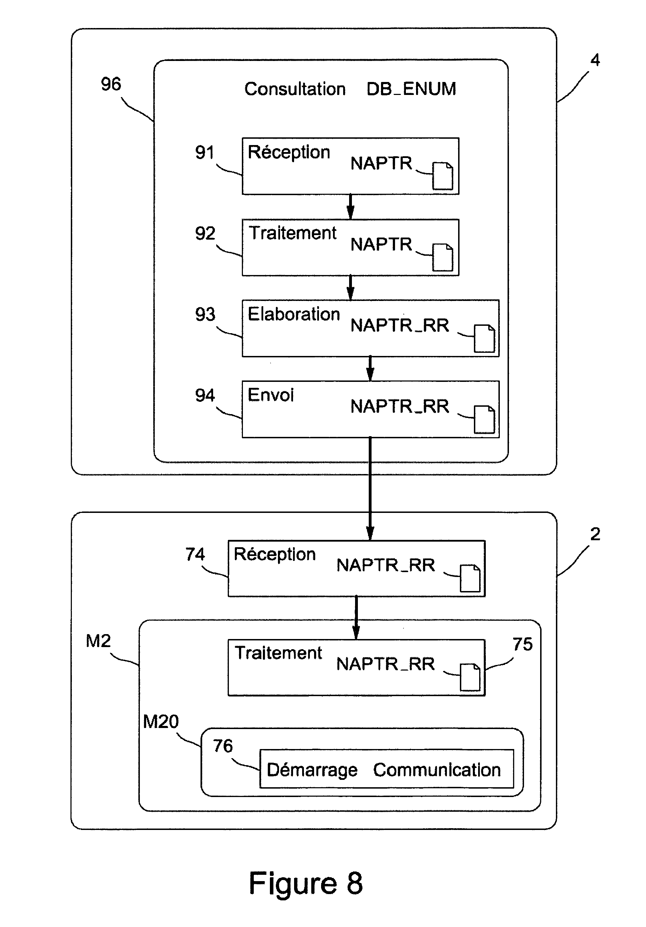

- la figure 8 représente une partie des étapes du procédé selon un mode de réalisation de l'invention,

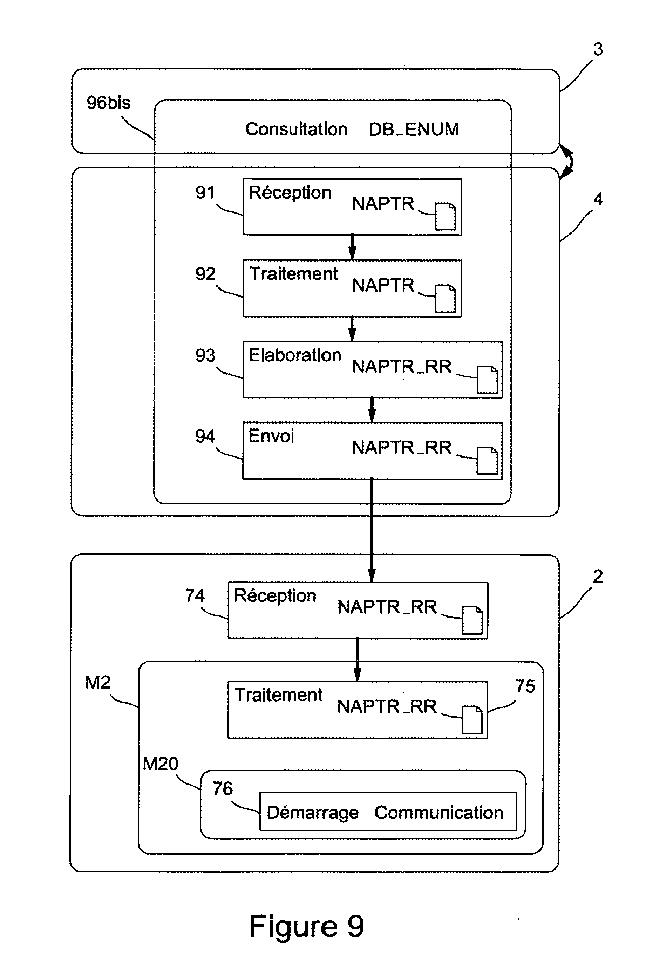

- la figure 9 représente une partie des étapes du procédé selon un mode de réalisation de l'invention,

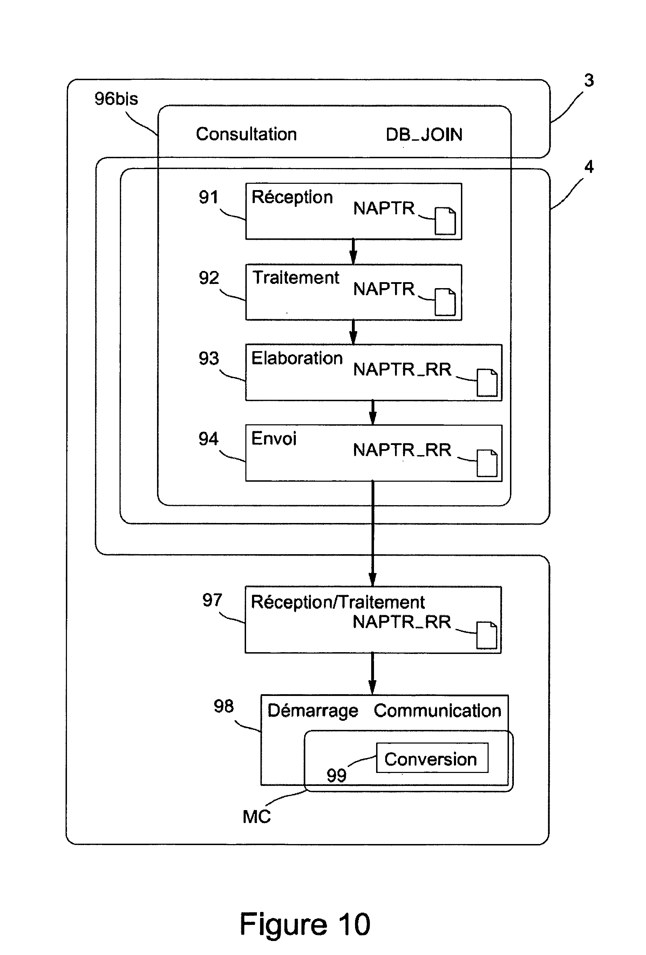

- la figure 10 représente une partie des étapes du procédé selon un mode de réalisation de l'invention,

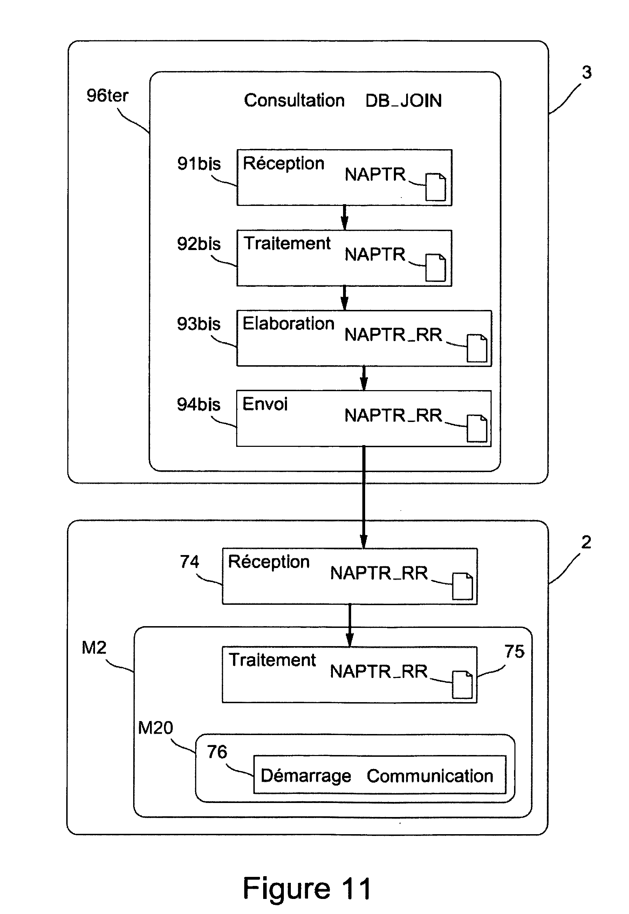

- la figure 11 représente une partie des étapes du procédé selon un mode de réalisation de l'invention,

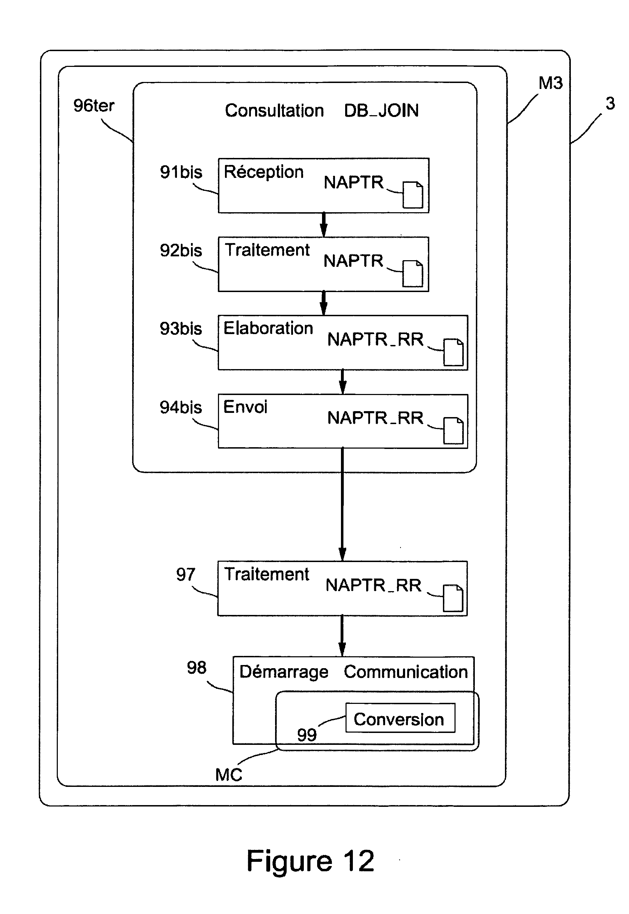

- la figure 12 représente une partie des étapes du procédé selon un mode de réalisation de l'invention.

La présente invention concerne un système et un procédé de gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant. Par le terme « joignabilité », on entend ici le fait qu'un utilisateur puisse être joint sur un terminal communicant. La notion de joignabilité n'est pas restreinte ici au média de communication utilisé et on considère qu'on joint un utilisateur si on communique avec lui en direct mais également si on communique avec lui en différé, par exemple en lui envoyant un message électronique (par exemple un email ou un SMS) ou en enregistrant un message vocal. De façon générale, la notion de joignabilité correspond ici à l'établissement d'une communication avec un correspondant, à travers tous les média disponibles. L'invention est basée sur l'utilisation des numéros uniques associés aux identifiants de communication des utilisateurs de terminaux communicants, pour offrir différentes fonctionnalités de gestion de la joignabilité des utilisateurs au cours du temps. On considère ici, à titre d'exemple non limitatif, que l'utilisateur ayant enregistré ses identifiants de communication et son numéro « unique » dans la base de données DNS d'un système de type ENUM est un utilisateur « appelé » car cet enregistrement sert à ce qu'il puisse être appelé par ses correspondants (ses contacts). Par le terme « identifiant de communication », on entend ici n'importe quel type d'identifiant qui peut être utilisé pour joindre une personne via un réseau de communication, comme par exemple tout type d'adresse électronique ou de numéro de téléphone. De même, on considère ici, également à titre d'exemple non limitatif, qu'un utilisateur cherchant à joindre cet « appelé » et/ou consultant la base de données DNS d'un système de type ENUM, pour retrouver les identifiants de communication de cet utilisateur « appelé », est un utilisateur « appelant ». Cependant, n'importe quel utilisateur peut bien entendu être appelant ou appelé selon les cas et cette terminologie ne doit être interprétée qu'à titre d'illustration pour expliquer dans quel sens a lieu la mise en relation des deux utilisateurs à un instant donné. L'invention permet d'ailleurs que l'appelant connaisse le numéro « unique » de l'appelé pour obtenir les identifiants de communication, mais également qu'il ne connaisse qu'un seul identifiant de communication de l'appelé et cherche justement à connaître le numéro unique de ce dernier, ou les autres identifiants de communication. Il va donc de soi que l'invention prévoit que le terminal (1) appelé comporte également, en plus de ses moyens de communication et de traitement spécifiques, les mêmes moyens de communication et de traitement que ceux spécifiques du terminal (2) appelant. Inversement, le terminal (2) appelant pourra comporter également, en plus de ses moyens de communication et de traitement spécifiques, les mêmes moyens de communication et de traitement que ceux spécifiques du terminal (1) appelé. Dans ce cas, comme nous le verrons plus loin, le terminal (2) appelant permettra à son utilisateur d'avoir accès à encore plus de fonctionnalités offertes par la présente invention. N'importe quel terminal comportant les moyens adéquats décrits ici devient un terminal appelant ou appelé selon au moins un mode de réalisation de la présente invention, et l'invention prévoit également, comme expliqué ci-après, que ces différents moyens spécifiques soient transposables d'un terminal à un autre.

Par le terme terminal communicant, qu'il soit appelé ou appelant, on entend ici n'importe quel type de terminal muni de moyens de communication sur au moins un réseau (RC) de communication. En effet, comme mentionné précédemment, les réseaux modernes permettent de communiquer via différents médias. Par exemple, les réseaux de téléphonie mobile permettent une navigation de type Internet mais également l'envoi de courriers électroniques (emails ou courriels, selon les terminologies utilisées d'après les langues respectivement anglaise et française). Un terminal donné pourra donc souvent accéder à différents réseaux de communication et on regroupe ici sous le terme de « au moins un réseau de communication » l'ensemble des réseaux disponibles à partir d'un terminal, sachant que ce terminal peut être de n'importe quel type et que le réseau peut en fait donner accès à plusieurs réseaux différents. Ainsi, à titre d'exemple, le terminal communicant pourra consister en un ordinateur muni d'une connexion Internet ou en téléphone mobile, de dernière génération ou non, pour téléphoner et/ou naviguer sur Internet et/ou sur le WAP (« Wireless Application Protocol ») et/ou envoyer des emails et/ou par n'importe quel type de moyen de communication à courte ou longue distance. L'essentiel ici consiste en ce que le système et le procédé permettent à un utilisateur de définir et gérer, en temps réel, sa joignabilité sur au moins un terminal communicant qu'il a à sa disposition à un instant donné. On décrit donc ici le système et le procédé comme s'inscrivant (étant mis en oeuvre) dans au moins un réseau (RC) de communication. Ce réseau est déployé, de façon connue en soi, par des opérateurs de communication, grâce à un ensemble de terminaux et/ou de serveurs et/ou de relais et/ou d'antennes etc. regroupés ici sous le terme « d'équipement opérateur ». Le système et le procédé s'inscrivant dans cet équipement opérateur, pourront être totalement intégrés dans l'équipement opérateur d'un opérateur de communication, sauf en ce qui concerne les terminaux communicants des utilisateurs bien entendu, puisque ces terminaux ne sont pas intégrés dans l'équipement opérateur mais communiquent grâce à ce dernier. Ainsi, les serveurs du système pourront, dans un mode de réalisation, être implémentés au sein des équipements opérateurs de différents opérateurs de communication. Dans les modes de réalisation décrits ici et dans une seconde demande déposée par la demanderesse en même temps que la présente demande, au moins un équipement opérateur est considéré comme appartenant au système car il permet d'aiguiller (et/ou de rediriger) les différentes communications générées au sein du système et de façon particulièrement avantageuse, permet à un utilisateur d'être joignable sur un ou plusieurs de ces identifiants de communications, qu'il aura choisi(s) au préalable. Dans d'autres modes de réalisation, décrits dans une troisième demande déposée par la demanderesse en même temps que la présente demande, l'invention, au moins pour ce qui concerne la gestion de la joignabilité, ne nécessite pas forcément d'intégration d'un équipement opérateur car celui-ci permet la mise en relation et l'adressage (l'aiguillage au sein du réseau) des données. L'invention décrite ici intègre donc un équipement opérateur par lequel passent les communications et au moins un opérateur de communication mettra en oeuvre les moyens nécessaires pour les transmissions de données requises et la mise en relation des utilisateurs au sein d'au moins un réseau de communication, pour permettre la mise en oeuvre de fonctionnalités nouvelles, comme expliqué en détail ci-après.

La présente invention, bien qu'ayant été préférentiellement développée dans le cadre du développement du système ENUM défini par la norme RFC 2916 de l'IETF, n'est pas limitée à ce seul exemple de système ni à la version actuelle de la norme correspondante. Ainsi, pour définir plus généralement l'invention, celle-ci s'inscrit dans le cadre de la gestion des identifiants de communication des utilisateurs de services de communication, stockés sur au moins un serveur (4) de centralisation, accessible via au moins un réseau (RC) de communication et comprenant au moins une base (DB_ENUM) de données, dite centralisée, stockant des données relatives à une pluralité d'appelés (A1), ces données comportant, pour chaque appelé (A1), un identifiant principal, dit numéro unique (11D), associé à au moins un identifiant (FQDN) de communication. Ainsi, on ne détaillera pas ici les protocoles utilisés pour l'adressage des données, car l'invention pourra être adaptée en fonction des protocoles utilisés et il est même probable que les fonctionnalités décrites ici soient rendues plus aisées du fait de l'évolution des protocoles standards de communication. Par exemple, une identification de l'utilisateur appelant (décrite plus loin) par le protocole IPv6 sera plus aisée qu'elle ne l'est pour l'instant par le protocole IPv4 utilisé aujourd'hui pour l'envoi de données aux serveurs DNS de centralisation des numéros uniques de type ENUM. De plus, l'identifiant principal ou numéro unique (1ID) est aujourd'hui du type e164, selon les normes en vigueur, mais l'invention permet bien entendu d'utiliser n'importe quel type de format pour cet identifiant principal ou numéro unique (1ID). De même, les média décrits ici ne le sont qu'à titre illustratif car les réseaux de communication modernes permettent de rendre compatibles les communications selon plusieurs média et l'invention permet justement de faire en sorte qu'un terminal puisse être mis en relation avec un autre terminal quelque soit le média, le protocole, le langage et le(s) réseau(x) utilisés, comme détaillé plus loin.

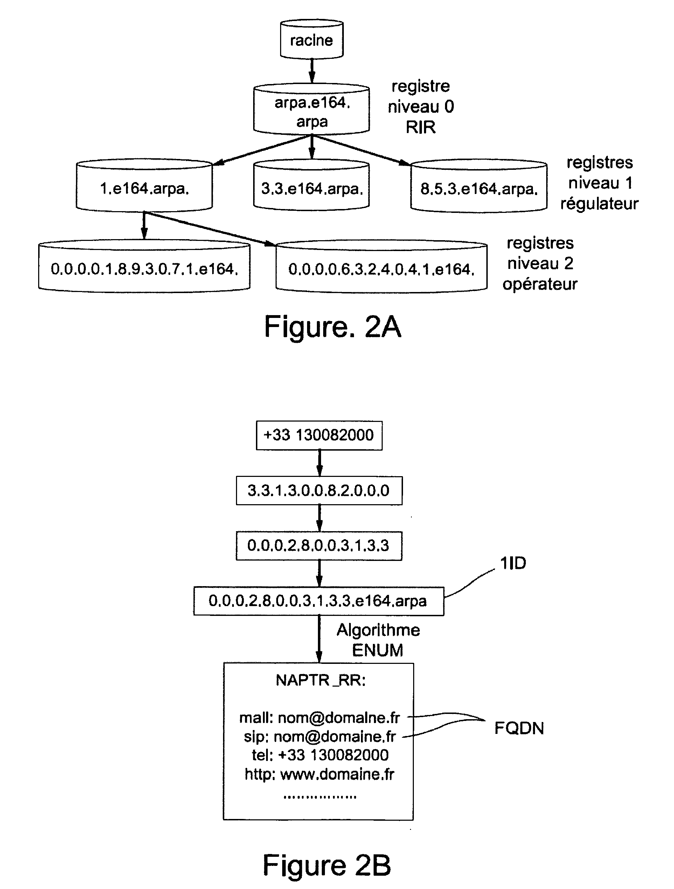

Le système selon la présente invention vise à permettre la gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant. Le système comporte au moins un serveur (4) de centralisation, accessible via le(s) réseau(x) (RC) de communication et comprenant au moins une base (DB_ENUM) de données, dite centralisée, stockant des données relatives à une pluralité d'appelés (A1), ces données comportant, pour chaque appelé (A1), un identifiant principal, dit numéro unique (1ID), associé à au moins un identifiant (FQDN) de communication. Ce type de serveur (4) de centralisation pourra, de façon connue en soi, être un serveur DNS de type ENUM permettant de délivrer les identifiants de communications d'utilisateurs enregistrés. La figure 2A montre l'organisation hiérarchique de tels serveurs de centralisation, dans l'exemple de la norme ENUM. Ce type de système ENUM est organisé en registres (ou bases de données) hiérarchisés. Une racine renvoie aux registres de niveau 0, qui constituent les « Registres Internet Régionaux » (RIR, pour « Regional Internet Registries » selon la terminologie anglaise). Il existe actuellement quatre RIR : ARIN pour les zones Amérique du Nord - Afrique ; APNIC pour les zones Asie-Pacifique ; LACNIC pour les zones Amériques du Sud - Caraïbes et RIPE NCC pour la zone Europe étendue. Ces registres renvoient aux registres de niveau 1, dit niveau « régulateur » correspondant aux pays de chacune des régions des RIR. Ces registres de niveau 1 renvoient aux registres de niveau 2, dit niveau « opérateur » correspondant aux opérateurs de communication dans chacun des pays. La figure 2B représente schématiquement et succinctement la conversion d'un numéro de téléphone en identifiant principal (« numéro unique ») selon la norme ENUM et l'association de ce numéro unique (1ID) avec une pluralité d'identifiants (FQDN) de communication.

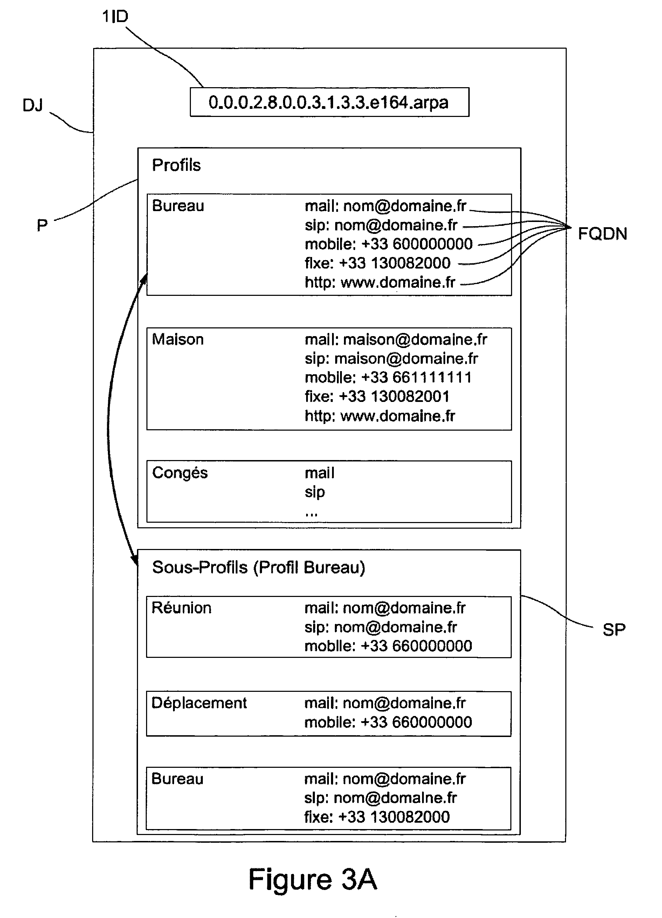

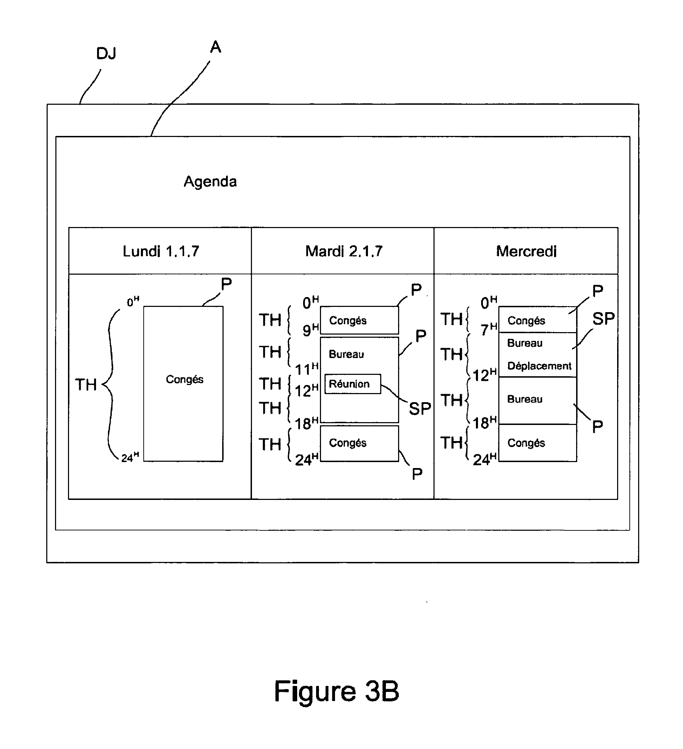

Le système comporte, selon un mode de réalisation de l'invention, au moins un terminal (1) appelé, comportant des moyens (10) de communication via le(s) réseau(x) (RC) de communication, des moyens (11) de traitement de données, des moyens (12) interactifs pour le contrôle du terminal (1) communicant par l'appelé (A1) et des moyens (13) de mémorisation. Les moyens (12) interactifs pour le contrôle du terminal (1) communicant par l'appelé (A1) pourront bien entendu consister, par exemple, en un clavier (numérique ou alphanumérique) et un écran et/ou un écran tactile. De plus, le système comporte au moins un module (M1, M3) de gestion de la joignabilité dont l'implémentation est différente selon les modes de réalisation. Ce module spécifique de la présente invention peut être implémenté soit dans des moyens de traitement (31) d'au moins un serveur (3) de gestion de la joignabilité des appelés (A1), dit serveur (3) de joignabilité, soit à la fois dans ce serveur (3) de joignabilité et dans les moyens de traitement (11) du terminal (1) appelé, selon les variantes de réalisation décrites ci-après. Le serveur (3) de joignabilité comporte évidemment des moyens (30) de communication le rendant accessible via le(s) réseau(x) (RC) de communication. Le module (ou les modules) (M1 et/ou M3) de gestion est spécifique (ou sont spécifiques) de la présente invention car il est agencé (ou sont agencés) pour, d'une part, contrôler un enregistrement de données, dites données (DJ) de joignabilité permettant aux utilisateurs de gérer leur joignabilité au cours du temps, et pour, d'autre part, mettre à jour le serveur (4) de centralisation, de façon à ce que les données (DJ) de joignabilité conditionnent les données présentes dans le serveur (4) de centralisation. Le module (M1 et/ou M3) contrôle donc un enregistrement dans les moyens (13) de mémorisation du terminal (1) appelé et/ou dans des moyens (33) de mémorisation du serveur (3) de joignabilité, d'au moins certaines données, dites données (DJ) de joignabilité. Ces données (DJ) de joignabilité, représentées schématiquement, à titre d'illustration non limitative sur les figures 3A et 3B, comportent des données représentatives d'au moins un numéro unique (1ID) et des données représentatives d'identifiants (FQDN) de communication de l'appelé (A1). De façon particulièrement avantageuse, ces données (DJ) de joignabilité pourront comporter des données représentatives d'au moins un profil (P). Ce profil comprend des données représentatives d'identifiants (FQDN) de communication de l'appelé (A1) triés selon un ordre de préférence choisi par l'appelé (A1). Ces données (DJ) de joignabilité pourront également comporter des données représentatives d'au moins un agenda (A) comprenant des données représentatives de tranches horaires (TH) et de paramètres relatifs à l'activation du (ou des) profil(s) (P) pendant les tranches horaires (TH). Les données représentatives de l'ordre de préférence, des tranches horaires (TH) et de l'activation du profil (P) sont déterminées par l'appelé (A1) grâce au(x) module(s) (M1 et/ou M3) de gestion et aux moyens (12) interactifs de son terminal (1) communicant et lui permettent donc de définir les identifiants (FQDN) de communication via lesquels il veut être joint. Le module (M3) de gestion implémenté dans le serveur (3) de joignabilité contrôle également une mise à jour des données stockées dans la base (DB_ENUM) de données centralisée du serveur (4) de centralisation, à partir des données (DJ) de joignabilité enregistrées dans les moyens (13 et/ou 33) de mémorisation du terminal (1) appelé et/ou du serveur (3) de joignabilité. Cette mise à jour a lieu lors d'un changement par l'appelé (A1) d'au moins une des données (DJ) de joignabilité et/ou au cours du temps, lors du passage d'une tranche horaire (TH) à une autre.

Le système comporte également au moins un équipement (5) opérateur comportant des moyens (50) de transmission de données pour l'établissement de communications (COM) via le(s) réseau(x) (RC) de communication. De façon plus spécifique à la présente invention, cet équipement (5) opérateur comporte également des moyens (MR) de redirection de transmission de données et au moins une base de données, dite base de données (DB_U) utilisateurs, stockant des données identifiant les utilisateurs qui possèdent des données (DJ) de joignabilité. Ce type de base de données, pourra consister, à titre d'exemple non limitatif, en une base de données de type HLR (« Home Location Resource », selon la terminologie anglaise) classiquement utilisée dans les réseaux de téléphonie mobile. Les moyens (MR) de redirection consultent cette base de données utilisateurs (DB_U) pour rediriger, au sein du (des) réseau(x) (RC) de communication, les transmissions de données entre les serveurs (3, 4) et/ou les terminaux (1, 2) du système. Ainsi, en fonction des appelants (A2) requérant une mise en relation avec un appelé, le présent système est capable de gérer vers quel serveur le terminal (2) appelant doit être aiguillé au sein du réseau (RC), pour optimiser la mise en relation des utilisateurs via leurs différents identifiants (FQDN) de communication. Ainsi, cette intégration des moyens (MR) de redirection dans l'équipement (5) opérateur permet qu'un appelé (A1) qui utilise le présent système ait définies les personnes auxquelles il souhaite que ses identifiants (FQDN) soient divulgués, par lesquelles il souhaite être contacté au cours du temps et même, éventuellement, le type d'informations qui peuvent leur être divulguées au cours du temps, en fonction de ses choix enregistrés dans ses données (DJ) de joignabilité. Pour cela, l'équipement (5) opérateur, au lieu de laisser l'appelant (A2) accéder directement au serveur (4) de centralisation, pourra rediriger les transmissions de données vers le serveur (3) de joignabilité qui permet une gestion plus élaborée des réponses fournies aux appelants (A2), comme détaillé ci-après. Comme mentionné précédemment, le présent système permet à priori des communications via n'importe quel type de média. Les moyens (50) de transmission de données et/ou les moyens (MR) de redirection de l'équipement (5) opérateur supporteront donc tout type de média de communication, fonctionnant selon au moins un protocole de communication. Ces médias supportés pourront, à titre d'exemples non limitatifs, consister en au moins un média parmi Internet, les messageries électroniques, les messageries électroniques instantanées, la téléphonie, la téléphonie mobile, etc. Comme détaillé ci-après, les moyens (MR) de redirection de l'équipement (5) opérateur, lorsqu'un appelant (A2) requiert l'établissement (70) d'une communication (COM) avec un appelé (A1) via le(s) réseau(x) (RC) de communication, permettent soit au terminal (2) appelant de consulter la base de données (DB_ENUM) centralisée, soit au serveur (3) de joignabilité de consulter la base de données (DB_ENUM) centralisée, soit au module (M3) de gestion serveur de consulter la base de données (DB_JOIN) de joignabilité.

Dans un premier mode de réalisation détaillé plus loin, les moyens spécifiques du serveur (3) de joignabilité comportent des données (DJ) de joignabilité et un module (M3) de gestion de la joignabilité. Dans ce mode de réalisation, les moyens les plus spécifiques de l'invention sont implémentés seulement dans le serveur (3) de joignabilité et le terminal (1) appelé n'est alors plus nécessairement différent des terminaux communicants connus de l'art antérieur. Ce mode de réalisation permet donc qu'un utilisateur ait accès à la présente invention sans que son terminal (1) communicant n'ait été modifié. Dans un second mode de réalisation, ces moyens spécifiques sont implémentés à la fois dans le terminal (1) appelé et dans le serveur (3) de joignabilité et ils coopèrent tous les deux de façon complémentaire.

Le module (M1) de gestion appelé et/ou le module (M3) de gestion serveur contrôle(nt), respectivement, les moyens (10) de communication du terminal (1) appelé et/ou les moyens (30) de communication du serveur (3) de joignabilité pour la mise à jour de la base de données (DB_ENUM) du serveur (4) de centralisation, selon différents modes de réalisation de l'invention. Le(s) module(s) (M1) de gestion appelé et/ou (M3) de gestion serveur gère(nt) les données représentatives des tranches horaires (TH) de façon à ce qu'elles soient modifiables selon les profils (P), de façon à permettre de choisir les heures d'activation des différents profils (P). Ainsi l'appelé (A1) pourra, soit en accédant au serveur (3) de joignabilité, soit grâce à la coopération du serveur (3) de joignabilité avec un terminal communicant utilisé par l'appelé (A1) (ce terminal pouvant alors être dénommé terminal (1) appelé), définir à quelles heures les différents profils qu'il a définis seront activés. Comme représenté sur les figures 3A et 3B, il pourra donc prévoir à l'avance sur quel média il pourra être joint par ses correspondants. De plus, comme également représenté sur les figures 3A et 3B, le module (M1) de gestion appelé et/ou le module (M3) de gestion serveur gère(nt), pour chaque profil (P), au moins un sous-profil (SP) pour définir différents ordres de préférence des identifiants (FQDN) de communication en fonction de différentes tranches horaires (TH). Ces données représentatives de ces sous-profils (SP) sont, selon différents modes de réalisation, enregistrées dans la base de données (DB_JOIN) de joignabilité du serveur (3) de joignabilité et/ou dans les moyens (13) de mémorisation du terminal (1) appelé. Pour chaque profil, l'appelé pourra définir des sous-profils lui permettant de choisir ponctuellement les média sur lesquels il veut être joignable, en fonction de son agenda ou de son choix du moment, sans avoir à bouleverser complètement l'organisation de l'un de ses profils (P). Les sous-profils pourront naturellement être activables et désactivables, par exemple de façon à ce que l'appelé soit joignable grâce aux identifiants sélectionnés dans un sous-profil de façon prioritaire par rapport aux identifiants sélectionnés dans le profil dont ce sous-profil dépend lorsque ce dernier est activé, mais que lorsque ce dernier est désactivé, l'appelé soit joignable grâce aux identifiants sélectionnés dans le profil. De plus, pour chaque profil (P) et sous-profil (SP), l'appelé pourra changer les tranches horaires, de façon à ce que la transition entre deux tranches horaires ne soit pas limitée à des heures prédéterminées. L'appelé pourra ainsi gérer précisément l'heure à laquelle se passe cette transition, par exemple à la seconde près. Le(s) module(s) (M1) de gestion appelé et/ou (M3) de gestion serveur gère(nt) donc les données représentatives des tranches horaires (TH) de façon à ce qu'elles soient modifiables selon les sous-profils (SP). Enfin, l'appelé pourra planifier à l'avance l'évolution de son agenda et donc des tranches horaires et de son profil. Pour cela, le module (M1) de gestion appelé et/ou le module (M3) de gestion serveur gère(nt) les données représentatives de l'agenda (A) pour organiser les tranches horaires (TH) par jour et/ou par semaine et/ou par mois et/ou par année. Afin de simplifier la gestion de la joignabilité par l'appelé (A1), l'invention prévoit que les données (DJ) soient compatibles avec les données générées par les logiciels d'organisation d'agenda tels que ceux des téléphones portables, ceux des ordinateurs ou ceux des PDA, quel que soit l'éditeur de ce type de logiciel. L'invention prévoit également que si les données ne sont pas compatibles, le module de gestion comporte des moyens d'importation et/ou d'exportation des données représentatives de l'agenda (A) dans les données (DJ) de joignabilité de l'appelé (A1) et/ou des données représentatives d'agenda dans les logiciels de type connu. Ainsi, l'invention permet une synchronisation (ou une combinaison) automatique des agendas entre eux.

Dans le premier mode de réalisation de l'invention, le module (M3) de gestion est implémenté dans le serveur (3) de joignabilité uniquement. Les moyens (31) de traitement du serveur (3) de joignabilité comportent un module (M3) de gestion, appelé module (M3) de gestion serveur. Les moyens (33) de mémorisation du serveur (3) de joignabilité stockent alors les données (DJ) de joignabilité. Par exemple, ces moyens (33) de mémorisation du serveur (3) de joignabilité pourront comporter au moins une base de données (DB_JOIN), dite de joignabilité, stockant des données relatives à une pluralité d'appelés (A1), ces données comportant des données (DJ) de joignabilité de chacun des appelés (A1). Les données (DJ) de joignabilité des différents utilisateurs enregistrés auprès de gestionnaires du serveur seront donc centralisées dans ce serveur, ce qui permet une mobilité des informations. En effet, un appelé (A1) se connectant au serveur (3) de joignabilité à l'aide de n'importe quel type de terminal communicant, pourra récupérer ses données (DJ) de joignabilité. Dans ce mode de réalisation, le module (M3) de gestion est capable de générer des données qui sont compatibles avec les moyens (11) de traitement du terminal (1) appelé et qui comportent au moins un type de données parmi les données (DJ) de joignabilité. Ces données compatibles pourront, par exemple, consister simplement en des pages Internet de type html (« hypertext mark-up language », selon la terminologie anglaise) ou xml (« extended mark-up language », selon la terminologie anglaise) qui seront affichées par le terminal (1) appelé qui les recevra, sans que cela ne nécessite de modification particulière. Cet exemple de pages Internet est bien entendu utilisé à titre illustratif pour montrer que dans ce mode de réalisation, le serveur (3) de joignabilité peut aisément générer des données compatibles avec le terminal (1) appelé de façon à ce que son utilisateur, c'est-à-dire l'appelé (A1), puisse sélectionner les données (DJ) de joignabilité qu'il souhaite. Dans un autre exemple, ces données compatibles pourront également être envoyées en même temps qu'une application logicielle téléchargeable par le terminal (1) appelé, telle qu'une applet, un plug-in ou tout autre type d'application destinée à être exécutée au sein d'un environnement logiciel en cours d'exécution sur le terminal (1) appelé. Ainsi, le terminal (1) appelé sera rendu compatible avec les données générées par le serveur (3) de joignabilité, sans nécessiter d'autre modification que le téléchargement et l'installation de ce type d'application logicielle. Il doit être évident pour l'homme de métier que le système pourra être programmé pour générer des données échangées entre le serveur (3) de joignabilité et le terminal (1) appelé dans n'importe quel format que l'on sait être compatible entre les différents types de terminaux communicants connus ou que l'on sait pouvoir rendre compatible par l'installation d'application exécutables au sein d'environnements logiciels exécutés sur les terminaux (1) appelés ou par le téléchargement de données. Dans un autre exemple de réalisation, les données compatibles pour consister en des enregistrements vocaux présentant différents choix possibles à l'appelé (A1) qui sélectionne, grâce aux moyens interactifs du terminal (1) appelé, les options qu'il a choisies. Pour cela, le module (M3) de gestion serveur pourra comporter par exemple des moyens de présentation de messages vocaux et des moyens de reconnaissance de tonalité, comme il est connu de l'art antérieur. Ainsi, le module (M3) de gestion serveur permettra la sélection de choix par l'appelé (A1), même à partir d'un téléphone fixe, grâce aux tonalités des touches du téléphone pressées par l'utilisateur pour valider ses choix réalisés en fonction des propositions contenues dans les messages vocaux. Le module (M3) de gestion contrôle les moyens (30) de communication du serveur (3) de joignabilité pour effectuer des transmissions, avec le terminal (1) appelé, de ces données compatibles générées. Ces données compatibles permettent alors la sélection, par l'appelé (A1), grâce aux moyens (11) de traitement et aux moyens (12) interactifs de son terminal (1) appelé, des données à enregistrer dans la base de données (DB_JOIN) de joignabilité du serveur (3) de joignabilité. D'autre part, le module (M3) de gestion serveur est également agencé pour générer des données compatibles avec le serveur (4) de centralisation, de façon à lui transmettre des données qui pourront être enregistrées dans la base de données (DB_ENUM) centralisée. Ainsi, ces données compatibles avec le serveur (4) de centralisation permettront la mise à jour de la base de données (DB_ENUM) du serveur (4) de centralisation à partir de la base de données (DB_JOIN) de joignabilité.

Dans le second mode de réalisation, le module (M1, M3) de gestion est implémenté à la fois dans le terminal (1) appelé et dans le serveur (3) de joignabilité. Les moyens (31) de traitement du serveur (3) de joignabilité comportent un module (M3) de gestion, appelé module (M3) de gestion serveur. Les moyens (33) de mémorisation du serveur (3) de joignabilité comportent au moins une base de données (DB_JOIN), dite de joignabilité, stockant des données relatives à une pluralité d'appelés (A1), ces données comportant des données (DJ) de joignabilité de chacun des appelés (A1). De même, les moyens (13) de mémorisation du terminal (1) appelé stockent au moins un type de données parmi les données (DJ) de joignabilité de l'appelé et les moyens (11) de traitement du terminal (1) appelé comportent également un module (M1) de gestion, appelé module (M1) de gestion appelé, complémentaire du module (M3) de gestion serveur. Le module (M1) de gestion appelé et le module (M3) de gestion serveur sont complémentaires l'un de l'autre et fonctionne de manière coordonnée. Dans une variante de réalisation, le module (M1) de gestion appelé pourra consister en une application logicielle téléchargeable par le terminal (1) appelé, telle qu'une applet, un plug-in ou tout autre type d'application destinée à être exécutée au sein d'un environnement logiciel en cours d'exécution sur le terminal (1) appelé. Ainsi, n'importe quel terminal (1) appelé exécutant un environnement logiciel supportant ce type d'application pourra être rendu compatible avec le présent système grâce à l'implémentation d'un module (M1) de gestion appelé dans ses moyens de traitement de données, simplement en se connectant au serveur (3) de joignabilité et en téléchargeant les données nécessaires à cette implémentation. Ces deux modules s'échangent, via le(s) réseau(x) (RC) de communication, des données comportant au moins un type de données parmi les données (DJ) de joignabilité, pour l'enregistrement, dans la base de données (DB_JOIN) de joignabilité, des données représentatives des identifiants (FQDN) de communication de l'appelé (A1) et/ou de son numéro unique (1ID) et/ou de son profil (P) et/ou de son agenda (A), sélectionnées par l'appelé (A1) sur le terminal (1) appelé. Le module (M3) de gestion serveur sert, comme dans le mode de réalisation précédent, d'interface (ou de tampon) entre les terminaux (1) appelés et le serveur (4) de centralisation. Le module (M3) de gestion serveur du serveur (3) de joignabilité génère également des données compatibles avec le serveur (4) de centralisation, pour la mise à jour de la base de données (DB_ENUM) du serveur (4) de centralisation à partir de la base de données (DB_JOIN) de joignabilité. Dans ce mode de réalisation, il se peut que les données de joignabilité ne soient pas présentes dans les moyens (13) de mémorisation du terminal (1) appelé ou que l'appelé (A1) souhaite mettre à jour son terminal (1) appelé à partir du serveur (3) de joignabilité, car il a choisi de centraliser ses identifiants de communication sur ce serveur (3). Dans ce cas, le module (M3) de gestion serveur contrôle les moyens (30) de communication pour l'envoi, vers le terminal (1) appelé, des données représentatives des identifiants (FQDN) de communication de l'appelé (A1) et/ou de son numéro unique (1ID) et/ou de son profil (P) et/ou de son agenda (A), lorsque ces données sont absentes des moyens (13) de mémorisation du terminal (1) appelé et/ou lorsque le module (M1) de gestion appelé le requiert.

Le serveur (4) de centralisation comporte naturellement des moyens (40) de communication, via le(s) réseau(x) (RC) de communication. Ces moyens (40) de communication sont, dans le présent système, agencés, en outre et en particulier, pour la réception de requêtes (NAPTR) d'obtention des identifiants (FQDN) de communication d'un appelé (A1) identifié par son numéro unique (1ID), pour l'envoi d'une réponse comprenant une liste (NAPTR_RR) d'identifiants (FQDN) de communication correspondant au numéro unique (1ID) de l'appelé (A1) et pour la réception de mises à jour de la base de données (DB_ENUM) centralisée à partir de la base de données (DB_JOIN) de joignabilité. D'autre part, le serveur (4) de centralisation comporte des moyens (41) de traitement de données, en outre et en particulier, pour le traitement des requêtes (NAPTR) d'obtention d'identifiants, l'identification du numéro unique (1ID) de l'appelé (A1) et l'élaboration de la réponse comprenant la liste (NAPTR_RR) d'identifiants (FQDN) de communication correspondants. Le serveur (4) de centralisation tel que décrit dans la présente demande peut naturellement constituer un des serveurs de la hiérarchie d'un système d'identifiants uniques, par exemple tel que ceux de la norme ENUM représentés sur les figures 2A et 2B. L'invention prévoit que ce serveur puisse en fait implémenter les fonctions du serveur (3) de joignabilité. De même, le serveur (3) de joignabilité, s'il implémente les fonctions du serveur (4) de centralisation, pourra constituer un des serveurs de la hiérarchie d'un système d'identifiants uniques, par exemple tel que ceux de la norme ENUM. Ainsi, dans les premier et second modes de réalisation de la présente invention, le serveur (3) de joignabilité peut en fait constituer, en intégrant les moyens spécifiques du serveur (4) de centralisation, un seul et même serveur comportant les deux bases de données (DB_ENUM, DB_JOIN), ainsi que des moyens (31, 41) de traitement de données et des moyens (30, 40) de communication spécifiques à ces deux serveurs, tels que décrits ici. Ces deux serveurs peuvent être implémentés directement dans l'équipement (5) opérateur d'un opérateur de communication car il est possible que chacun des opérateurs de communication possèdent un système d'identifiants uniques, par exemple tel que ceux de la norme ENUM. Dans ce cas, les transmissions de données et redirection des transmissions par l'équipement (5) opérateur ne seront plus nécessaires ou auront lieu au sein de cet équipement, c'est-à-dire entre les serveurs et terminaux de l'opérateur de communication. De même, les moyens (MR) de redirection des communications pourront également être implémentés dans d'autres équipements (5') opérateurs que l'équipement (5) opérateur du système, de façon à permettre une interopérabilité entre les différents opérateurs de communication. De plus, dans un mode de réalisation de l'invention, le serveur (4) de centralisation comporte des moyens (S) d'authentification des serveurs (3) de joignabilité dont le module (M3) de gestion met à jour la base de données (DB_ENUM) centralisée, de façon à limiter l'accès à des serveurs (3) de joignabilité préalablement enregistrés auprès de gestionnaires du serveur (4) de centralisation. Ainsi, le système permet d'éviter qu'un serveur non autorisé ne modifie les identifiants (FQDN) de communication d'un utilisateur du présent système.

Dans une variante de réalisation de la présente invention, les moyens (31) de traitement de données du serveur (3) de joignabilité pourront comporter également des moyens (S) d'authentification pour identifier les appelés (A1) enregistrant des données de joignabilité dans la base de données (DB_JOIN) du serveur (3) de joignabilité. Ainsi, le système permet de limiter l'accès au module (M3) de gestion à des appelés (A1) préalablement enregistrés auprès de gestionnaires du serveur (3) de joignabilité.

Dans un mode de réalisation de l'invention, les fonctionnalités du présent système sont rendues compatibles également pour les appelants (A2). Ainsi, dans ce mode de réalisation de l'invention, le système comporte également au moins un terminal (2) appelant. Ce terminal (2) appelant comporte naturellement des moyens (20) de communication via le(s) réseau(x) (RC) de communication pour joindre au moins un appelé (A1) sur au moins un terminal (1) appelé, grâce à des requêtes (RT) d'établissement de communication, et communiquer avec ce terminal (1) appelé au travers d'au moins un média de communication. De plus, selon la présente invention, ces moyens (20) de communication peuvent également être agencés pour envoyer des requêtes (NAPTR) d'obtention des identifiants (FQDN) de communication d'un appelé (A1) directement vers le serveur (3) de joignabilité (si ce terminal (2) intègre les fonctionnalités du système) et/ou vers le serveur (4) de centralisation et pour recevoir des réponses contenant des listes (NAPTR_RR) d'identifiants (FQDN) de communication. De façon plus spécifique à la présente invention, ce terminal (2) appelant pourra comporter également des moyens (21) de traitement de données comportant un module de gestion, dit module (M2) de gestion appelant. Dans une variante de réalisation, ce module (M2) de gestion appelant comporte un lanceur (M20) d'application gérant les moyens (20) de communication pour sélectionner le média correspondant à l'identifiant (FQDN) de communication prioritaire dans une liste (NAPTR_RR) reçue. Cette sélection pourra être réalisée manuellement par l'appelant (A2) sur son terminal(2) appelant, par exemple grâce à des moyens interactifs tels qu'un clavier (numérique ou alphanumérique) et un écran et/ou un écran tactile. Dans une variante de réalisation, cette sélection du média par le lanceur (M20) d'application pourra être automatique. Dans cette variante, le lanceur (M20) d'application du module (M2) de gestion appelant, pourra gérer les moyens (20) de communication pour sélectionner les différents média de communication supportés par le terminal (2) appelant. De préférence, le lanceur (M20) d'application tente d'établir une communication via le média correspondant à l'identifiant (FQDN) de communication prioritaire dans la liste (NAPTR_RR) reçue. Cependant, par exemple en cas d'échec de la communication via le média prioritaire, le lanceur (M20) d'application pourra tenter d'établir la communication via un autre média, en effectuant une sélection de média, soit successivement en fonction de la priorité définie d'après la liste des identifiants (FQDN) de communication, soit simultanément en tentant d'établir une communication sur tous les média disponibles en même temps. Au cours de cette sélection automatique, le lanceur (M20) d'application envoie des requêtes d'établissement de communication à l'équipement (5) opérateur et traite la réponse reçue afin d'établir la communication. Dans le cas d'une sélection successive, le lanceur (M20) d'application essaie le média de communication suivant dans la liste de priorité jusqu'à établir une communication, en abandonnant après un nombre déterminé d'itérations infructueuses. Dans le cas d'une sélection simultanée, le lanceur (M20) d'application cesse ses tentatives d'établissement de communication sur les différents média si au moins l'une des communications est établie et abandonne après un nombre déterminé d'itérations infructueuses. De plus, le module (M2) de gestion appelant, pourra également gérer au moins un numéro unique (1ID) et/ou au moins un identifiant (FQDN) de communication, correspondant à au moins un appelé (A1) et mémorisé(s) dans des moyens (23) de mémorisation du terminal (2) appelant. Grâce à ce module (M2) de gestion, qui pourra naturellement être en fait le même module (M1) que celui d'un terminal (1) appelé au sens où on l'entend ici, mais requérant l'obtention des identifiants (FQDN) d'un appelé (A1), ce terminal pourra accéder directement au serveur (3) de joignabilité au lieu du serveur (4), ou alors les moyens (MR) de redirection l'équipement (5) opérateur pourront le rediriger vers les serveur (3) de joignabilité. Ainsi, le module (M2) de gestion de ce terminal (2) appelant pourra recevoir au moins une partie des données de joignabilité de l'appelé (A1) dont il souhaitait obtenir les identifiants de communication. Par exemple, cet appelant (A2) pourra obtenir l'agenda de l'appelé (A1) pour le jour auquel il le requiert, éventuellement à condition que l'appelé (A1) l'ait autorisé au préalable. En effet, dans les différentes variantes de réalisation où le terminal (2) appelant requiert l'obtention des identifiants (FQDN) de communication de l'appelé (A1) directement auprès du serveur (3) de joignabilité ou est redirigé vers ce dernier, les données stockées dans la base de données (DB_JOIN) de joignabilité pourront comporter également des données relatives à des paramètres de confidentialité du numéro unique (1ID) et des identifiants (FQDN) de communication de l'appelé (A1). Ces données permettent aux appelés (A1) de définir les appelants (A2) autorisés à obtenir leurs données (DJ) de joignabilité et/ou de définir quelles données ils sont autorisés à obtenir parmi ces données (DJ) de joignabilité. Ainsi, si un terminal (2) appelant requiert l'obtention des identifiants (FQDN) de communication de l'appelé (A1), il sera au préalable identifié par le serveur (3) de joignabilité qui, en fonction de ces paramètres de confidentialité, délivrera les informations requises, si l'appelant (A2) et/ou le terminal (2) appelant est identifié (ou sont identifiés) comme étant autorisé(s) à obtenir au moins une partie de leurs données (DJ) de joignabilité. Les moyens (S) d'authentification implémentés dans les moyens (31) de traitement de données du serveur (3) de joignabilité seront donc, dans ce mode de réalisation, agencés pour identifier les appelants (A2) pour lesquels la base de données (DB_ENUM) centralisée ou la base de données (DB_JOIN) de joignabilité est consultée et limiter l'accès à des appelants (A2) préalablement enregistrés par les appelés (A1) dans les paramètres de confidentialité, comme étant autorisés à obtenir au moins une partie de leurs données (DJ) de joignabilité. Comme mentionné précédemment, l'appelant (A2) aura alors accès à différents types d'informations concernant l'appelé (A1), en fonction des choix définis par l'appelé (A1) dans les paramètres de confidentialité et cet appelant (A2) aura accès à plus d'informations si son terminal (2) communicant comporte un module (M2) de gestion permettant de recevoir les données (DJ) de joignabilité de l'appelé (A1), filtrées par le serveur (3) de joignabilité.

Dans le cas où les moyens (MR) de redirection de l'équipement (5) opérateur redirige le terminal (2) appelant directement vers le serveur (3) de joignabilité ou dans le cas où le terminal (2) appelant requiert directement l'obtention des identifiants (FQDN) de communication de l'appelé auprès du serveur (3) de joignabilité, ce dernier pourra traiter cette requête et élaborer une réponse comportant différents types d'informations correspondant à au moins une partie des données (DJ) de joignabilité. Dans un mode de réalisation, les moyens (31) de traitement du serveur (3) de joignabilité seront donc agencés pour le traitement des requêtes (NAPTR) d'obtention d'identifiants, l'identification du numéro unique (1ID) de l'appelé (A1) et l'élaboration de la réponse comprenant au moins la liste (NAPTR_RR) d'identifiants (FQDN) correspondant à cet appelé. Les moyens (30) de communication du serveur (3) de joignabilité seront agencés pour la réception de requêtes (NAPTR) d'obtention des identifiants (FQDN) de communication d'un appelé (A1) identifié par son numéro unique (1ID) et pour l'envoi d'une réponse comprenant au moins une liste (NAPTR_RR) d'identifiants (FQDN) de communication correspondant au numéro unique (1ID) de l'appelé (A1). En plus de la liste d'identifiants (FQDN) de communication, le serveur (3) sera capable, comme expliqué précédemment, d'envoyer des informations relatives aux données de joignabilité de l'appelé (A1) plus complètes que ne le ferait le serveur (4) de centralisation.

Dans un mode de réalisation de l'invention, les moyens (S) d'authentification pourront être implémentés dans l'équipement (5) opérateur. Ainsi, l'équipement (5) opérateur pourra authentifier les appelés (A1) et/ou les appelants (A2) accédant au serveur (3) de joignabilité, ainsi que les serveurs (3) de joignabilité accédant au serveur (4) de centralisation. Pour identifier les appelés (A1), l'équipement (5) opérateur pourra se baser sur la base de données (DB_U) utilisateurs. Pour identifier les appelants (A2), la base de données (DB_U) utilisateurs devra alors comporter des données relatives à des identifiants d'appelants (A2) autorisés à consulter le serveur (3) de joignabilité pour un appelé (A1) donné. Pour identifier les serveurs (3) de joignabilité, l'équipement (5) opérateur devra stocker des données représentatives de serveurs (3) de joignabilité autorisés à accéder à des serveurs (4) de centralisation. Dans un mode de réalisation, l'équipement (5) opérateur comportera d'ailleurs une base de données stockant les serveurs de centralisation correspondant à une pluralité d'appelés (A1). Lorsque des moyens (20) de communication d'au moins un terminal (2) appelant envoient, vers au moins un serveur de centralisation, une requête (NAPTR) d'obtention des identifiants (FQDN) de communication d'un appelé (A1) erronée ou incomplète ou inadaptée au(x) réseau(x) (RC), cette base de données sera consultée par les moyens (MR) de redirection, pour identifier, en fonction de l'appelé (A1), le serveur de centralisation vers lequel cette requête (NAPTR) doit être envoyée et rediriger cette requête (NAPTR) d'obtention des identifiants (FQDN) de communication vers ce serveur identifié.

D'une manière générale, les moyens (MR) de redirection de l'équipement (5) opérateur sont activés lorsque des moyens (20) de communication d'au moins un terminal (2) appelant envoient une requête (RT) d'établissement d'une communication vers les moyens (50) de transmission de données de l'équipement (5) opérateur, pour joindre au moins un appelé (A1) sur au moins un terminal (1) appelé et communiquer avec ce terminal (1) appelé via le(s) réseau(x) (RC) de communication. Ces moyens (MR) de redirection activés consultent alors la base de données (DB_U) utilisateurs. Lorsque l'appelé (A1) est identifié comme n'étant pas enregistré dans cette base de données (DB_U) utilisateurs, les moyens (MR) de redirection envoient alors une requête (NAPTR) d'obtention des identifiants (FQDN) de communication d'un appelé (A1) vers le serveur (4) de centralisation pour consultation de la base de données (DB_ENUM) centralisée. Lorsque l'appelé (A1) est identifié comme étant enregistré dans cette base de données (DB_U) utilisateurs, les moyens (MR) de redirection envoient alors une requête (NAPTR) d'obtention des identifiants (FQDN) de communication d'un appelé (A1) vers le serveur (3) de joignabilité pour consultation de la base de données (DB_JOIN) de joignabilité. De même, les moyens (MR) de redirection de l'équipement (5) opérateur sont activés et consultent la base de données (DB_U) utilisateurs lorsque des moyens (20) de communication d'au moins un terminal (2) appelant envoient une requête (NAPTR) d'obtention des identifiants (FQDN) de communication d'un appelé (A1), pour obtenir les identifiants (FQDN) de l'appelé (A1). Lorsque l'appelé (A1) est identifié comme n'étant pas enregistré dans cette base de données (DB_U) utilisateurs, les moyens (MR) de redirection transmettent cette requête (NAPTR) vers le serveur (4) de centralisation pour consultation de la base de données (DB_ENUM) centralisée. Lorsque l'appelé (A1) est identifié comme étant enregistré dans cette base de données (DB_U) utilisateurs, les moyens (MR) de redirection transmettent cette requête (NAPTR) vers le serveur (3) de joignabilité pour consultation de la base de données (DB_JOIN) de joignabilité ou pour consultation de la base de données (DB_ENUM) centralisée par le serveur (3) de joignabilité. Le choix entre ces deux types de consultation pourra être effectué, par exemple, dans une première variante de réalisation, en fonction du type de terminal (2) appelant (intégrant ou non un module (M2) de gestion), ou, dans une seconde variante de réalisation, en fonction de paramètres définis par l'appelé (A1), stockés dans la base de données (DB_U) utilisateurs, ces paramètres définissant si l'appelé (A1) souhaite que ses correspondants puissent obtenir des détails relatifs à ses données (DJ) de joignabilité.

Dans un mode de réalisation de l'invention, le module (M3) de gestion serveur, activé lors de la consultation de la base de données (DB_ENUM) centralisée ou de la consultation de la base de données (DB_JOIN) de joignabilité, est également agencé pour la réception et/ou le traitement de la réponse contenant la liste (NAPTR_RR) d'identifiants (FQDN) de communication de l'appelé (A1). De plus, le module (M3) de gestion serveur comporte un lanceur (M30) d'application agencé pour rediriger la communication (COM), via l'équipement (5) opérateur, sur un média correspondant à l'identifiant (FQDN) de communication prioritaire dans le profil (P) activé au cours de la tranche horaire (TH) à laquelle l'appelant (A2) a requis une communication (COM), lorsque le terminal (2) appelant est compatible avec ce média. En revanche, lorsque le terminal (2) appelant utilise un média différent de celui correspondant à cet identifiant (FQDN) de communication prioritaire et que le terminal (2) appelant n'est pas compatible avec ce média, des moyens (MC) de conversion de média du lanceur (M30) d'application du serveur (3) de joignabilité sont activés pour convertir les données transmises par le terminal (2) appelant en données compatibles avec ce média. Ces moyens (MC) de conversion de média pourront exécuter au moins une des fonctions suivantes, données à titre d'exemple non limitatif, soit de boîte vocale d'enregistrement de message vocal (VO), soit de reconnaissance vocale pour la conversion d'un message vocal (VO) en texte de message électronique (email) ou de message court (SMS) ou de message multimédia court (MMS), soit de synthèse vocale pour la conversion d'un texte de message électronique (email) ou de message court (SMS) ou de message multimédia court (MMS) en message vocal (VO), soit de convertisseur de message électronique (mail) en message court (SMS) ou réciproquement, soit de convertisseur de message électronique en message multimédia court (MMS) ou réciproquement.

Les différents modes de réalisation du système selon l'invention décrits ici permettent la mise en oeuvre d'un procédé de gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant. Le mode de réalisation le plus général de ce procédé sera mis en oeuvre par un système comportant au moins un terminal (1) appelé, au moins un serveur (4) de centralisation et au moins un module (M3) de gestion, implémenté dans des moyens de traitement (31) d'au moins un serveur (3) de gestion de la joignabilité et éventuellement d'un module (M1) de gestion implémenté dans les moyens de traitement (11) du terminal (1) appelé.

Une première étape principale du procédé selon l'invention consiste en une étape d'enregistrement (80) d'au moins certaines données (DJ) de joignabilité, par le module (M3) de gestion, dans des moyens (33) de mémorisation du serveur (3) de joignabilité. Selon le mode de réalisation, lorsque le terminal (1) appelé comporte également un module (M1) de gestion, cet enregistrement (80) pourra également avoir lieu dans les moyens (13) de mémorisation du terminal (1) appelé. Cette étape (80) d'enregistrement des données (DJ) de joignabilité comporte au moins une étape de modification des tranches horaires (TH) selon les profils (P), de façon à permettre de choisir les heures d'activation des différents profils (P). De plus, dans une variante de réalisation, cette étape d'enregistrement (80) pourra comporter au moins une étape d'enregistrement d'au moins un sous-profil (SP) pour définir différents ordres de préférence des identifiants (FQDN) de communication en fonction de différentes tranches horaires (TH). Cette étape d'enregistrement d'au moins un sous-profil (SP), par le(s) module(s) (M1, M3) de gestion, comporte une étape de modification des tranches horaires (TH) selon les sous-profils (SP). Enfin, l'étape (80) d'enregistrement des données représentatives des tranches horaires (TH), par le(s) module(s) (M1, M3) de gestion dans les moyens (13, 33) de mémorisation du terminal (1) appelé et/ou du serveur (3) de joignabilité pourra comporter au moins une étape d'organisation des tranches horaires (TH) par jour et/ou par semaine et/ou par mois et/ou par année.

Une seconde étape principale du procédé selon l'invention consiste en une étape de mise à jour (90), par le module (M3) de gestion, des données stockées dans la base (DB_ENUM) de données centralisée du serveur (4) de centralisation, à partir des données (DJ) de joignabilité enregistrées dans les moyens (33) de mémorisation du serveur (3) de gestion. Cette étape de mise à jour pourra avoir lieu automatiquement, lors d'un changement par l'appelé (A1) d'au moins une des données (DJ) de joignabilité et/ou au cours du temps, lors du passage d'une tranche horaire (TH) à une autre. Cette étape de mise à jour (90) comporte une étape de transmission (86), via le(s) réseau(x) (RC) de communication, de données représentatives des identifiants (FQDN) de communication de l'appelé (A1) et/ou de son numéro unique (1ID), par le module (M1, M3) de gestion vers des moyens (40) de communication du serveur (4) de centralisation. Lors du passage automatique d'une tranche horaire (TH) à une autre dans l'agenda (A) stocké sur le serveur (3) de joignabilité, une mise à jour des données (DJ) de joignabilité pourra être automatiquement envoyée au terminal (1) appelé pour qu'ils contiennent les bonnes informations et que l'appelé (A1) soit automatiquement averti des changements d'au moins une de ses données de joignabilité (passage d'un profil à un autre par exemple).

Une troisième étape principale du procédé selon l'invention consiste en une consultation (51), par au moins un équipement (5) opérateur, d'au moins une base de données de l'équipement (5) opérateur, dite base de données (DB_U) utilisateurs, stockant des données identifiant les utilisateurs qui possèdent des données (DJ) de joignabilité. Cette étape est mise en oeuvre pour l'établissement (70) de communications (COM) via le(s) réseau(x) (RC) de communication, par des moyens (50) de transmission de données de l'équipement (5) opérateur. Cette étape est suivie d'au moins une étape de redirection (77, 78, 79) de transmissions de données entre les serveurs (3, 4) et/ou les terminaux (1, 2) du système, par des moyens (MR) de redirection de transmission de données de l'équipement (5) opérateur. Comme expliqué précédemment en référence au système selon l'invention, la consultation de la base de données utilisateurs permet d'identifier si les utilisateurs dont l'équipement (5) opérateur est en train de traiter les transmissions de données sont inscrits auprès d'un serveur (3) de joignabilité et possèdent donc des données (DJ) de joignabilité. En fonction des utilisateurs, l'équipement opérateur peut alors les mettre en relation plus efficacement et permettre au serveur (3) de joignabilité soit de mettre en oeuvre des fonctionnalités de filtrage des communications ou des données délivrées aux utilisateurs, soit de délivrer au contraire plus d'informations aux utilisateurs que ne le permettrait un serveur (4) de centralisation classique.

Dans le cas du premier mode de réalisation du système selon l'invention, un premier mode de réalisation du procédé consiste en ce que le module (M3) de gestion serveur met en oeuvre une étape d'enregistrement (80) des données (DJ) de joignabilité dans les moyens (33) de mémorisation du serveur (3) de gestion comportant au moins une base de données (DB_JOIN), dite de joignabilité, stockant des données relatives à une pluralité d'appelés (A1), ces données comportant des données (DJ) de joignabilité de chacun des appelés (A1). Pour la mise en oeuvre de cette étape d'enregistrement (80) des données (DJ) de joignabilité, dans ce mode de réalisation, le module (M3) de gestion serveur met d'abord en oeuvre une étape de création (81) de données compatibles avec les moyens (11) de traitement du terminal (1) appelé et comportant au moins un type de données parmi les données (DJ) de joignabilité. Ensuite, une étape de transmission (82) de ces données compatibles générées vers le terminal (1) appelé, via le(s) réseau(x) (RC) de communication permet à l'appelé (A1) de mettre en oeuvre une étape de sélection (83) parmi les données transmises, grâce aux moyens (11) de traitement et aux moyens (12) interactifs de son terminal (1) appelé, des données à enregistrer dans la base de données (DB_JOIN) de joignabilité du serveur (3) de gestion. Enfin, une étape de transmission (84) des données sélectionnées par le terminal (1) appelé vers le module (M3) de gestion serveur, via le(s) réseau(x) (RC) de communication, permet au module (M3) de gestion serveur, de mettre en oeuvre l'étape proprement dite d'enregistrement (80) de ces données dans la base de données (DB_JOIN) du serveur (3) de joignabilité. Ensuite, une étape de création (85), par le module (M3) de gestion serveur, de données compatibles avec le serveur (4) de centralisation, permet la mise à jour (90) de la base de données (DB_ENUM) du serveur (4) de centralisation à partir de la base de données (DB_JOIN) de joignabilité.

Dans le cas du second mode de réalisation du système selon l'invention où le module (M1, M3) de gestion est implémenté à la fois dans le terminal (1) appelé et dans le serveur (3) de gestion, un second mode de réalisation du procédé consiste en ce que le module (M3) de gestion serveur et le module (M1) de gestion appelé coopèrent pour l'enregistrement (80) des données de joignabilité dans la base de données (DB_JOIN) de joignabilité et la mise à jour (90) de la base de données (DB_ENUM) centralisée. Cette coopération comporte une étape de sélection (83) par l'appelé (A1), grâce au module (M1) de gestion appelé contrôlant les moyens (12) interactifs et les moyens (13) de mémorisation de son terminal (1) appelé, parmi les données (DJ) de joignabilité stockées dans les moyens (13) de mémorisation du terminal (1) appelé, des données à enregistrer dans la base de données (DB_JOIN) de joignabilité du serveur (3) de gestion. Une étape de transmission (84) des données sélectionnées par le terminal (1) appelé vers le module (M3) de gestion serveur, via le(s) réseau(x) (RC) de communication, permet alors l'enregistrement (80), par le module (M3) de gestion serveur, de ces données dans la base de données (DB_JOIN) du serveur (3) de joignabilité. Ensuite, une étape de création (85), par le module (M3) de gestion serveur, de données compatibles avec le serveur (4) de centralisation, permet la mise à jour (90) de la base de données (DB_ENUM) du serveur (4) de centralisation à partir de la base de données (DB_JOIN) de joignabilité. Dans ce mode de réalisation, l'étape d'enregistrement (80) des données (DJ) de joignabilité peut être mise en oeuvre également par le module (M1) de gestion appelant, pour enregistrer une copie des données (DJ) de joignabilité dans les moyens (13) de mémorisation de son terminal (1) appelé. Cette étape n'est pas nécessaire mais elle permet que l'appelé ait, dans son terminal, les données de joignabilité et puisse les mettre à jour à partir du serveur (3) de joignabilité ou, à l'inverse, éventuellement modifier celles stockées dans le serveur (3) de joignabilité. L'appelé (A1) a alors le choix de centraliser ses données de joignabilité sur le serveur (3) de joignabilité ou de plutôt les rendre mobiles et transposables d'un terminal communicant qu'il utilise à un autre. De plus, le procédé peut, dans ce second mode de réalisation, comporter une étape d'envoi (82bis), par les moyens (30) de communication du serveur (3) de joignabilité, vers le terminal (1) appelé, des données représentatives des identifiants (FQDN) de communication de l'appelé (A1) et/ou de son numéro unique (1ID) et/ou de son profil (P) et/ou de son agenda (A), lorsque le terminal (1) appelé ne stocke pas ces données et/ou lorsque le module (M1) de gestion appelé le requiert.

Comme mentionné précédemment au sujet du système selon l'invention, le serveur (3) de joignabilité et le serveur (4) de centralisation peuvent constituer un seul et même serveur. Le procédé peut alors comporter une étape d'implémentation des deux bases de données (DB_ENUM, DB_JOIN), ainsi que des moyens (31, 41) de traitement de données et des moyens (30, 40) de communication spécifiques de ces deux serveurs dans l'un ou dans l'autre. L'étape de création (85) de données compatibles avec le serveur (4) de centralisation consiste alors simplement en une conversion d'au moins une partie des données de la base de données (DB_JOIN) de joignabilité en données de la base de données (DB_ENUM). De même, dans ce mode de réalisation, l'étape de transmission (86) de données représentatives des identifiants (FQDN) de communication de l'appelé (A1) et/ou de son numéro unique (1ID), par le module (M3) de gestion serveur vers des moyens (40) de communication du serveur (4) de centralisation, ne sera pas nécessaire. Enfin, l'étape de mise à jour (90) de la base de données (DB_ENUM) du serveur (4) de centralisation consiste alors en un enregistrement de ces données converties dans la base de données (DB_ENUM). Par le terme conversion des données entre les deux bases de données, on entend ici tout type d'opération permettant le transfert d'une base de données à l'autre, qu'il y ait effectivement besoin d'une conversion ou non. De plus, les deux bases de données pourront bien entendu être regroupées en fait en une seule base de données, pour autant que les moyens de traitement de ce serveur unique permettent une gestion des données en fonction de la tâche à exécuter, c'est-à-dire en fonction de ce qui est demandé par le terminal accédant à ces données. Enfin, comme mentionné précédemment, tous les moyens spécifiques de ces deux serveurs peuvent être intégrés dans l'équipement (5) opérateur.

Dans une autre variante de réalisation, l'invention prévoit que le procédé comporte une étape préalable de déclaration (71) des appelés (A1) auprès de gestionnaires du serveur (3) de joignabilité. Dans cette variante, l'étape de transmission (84) de données, pour l'enregistrement (80) dans la base de données (DB_JOIN) de joignabilité, comporte une étape d'authentification (72) de l'appelé (A1) accédant au serveur (3) de joignabilité, par des moyens (S) d'authentification présents dans les moyens (31) de traitement de données du serveur (3) de joignabilité, de façon à limiter l'accès à des appelés (A1) préalablement enregistrés auprès de gestionnaires du serveur (3) de joignabilité au cours de l'étape préalable de déclaration (71) des appelés (A1). Dans une variante supplémentaire, l'étape d'enregistrement (80) du profil (P) dans la base de données (DB_JOIN) de joignabilité comporte également une étape d'enregistrement (95) de données relatives à des paramètres de confidentialité du numéro unique (1ID) et des identifiants (FQDN) de communication de l'appelé (A1), ces données permettant aux appelés (A1) de définir les appelants (A2) autorisés à obtenir leurs données (DJ) de joignabilité et/ou de définir quelles données ils sont autorisés à obtenir parmi ces données (DJ) de joignabilité. Dans une variante supplémentaire, l'étape de transmission (86) de données pour la mise à jour (90) de la base de données (DB_ENUM) centralisée comporte une étape d'authentification (72bis) du serveur (3) de joignabilité, par des moyens (S) d'authentification du serveur (4) de centralisation, de façon à limiter l'accès à des serveurs (3) de joignabilité préalablement enregistrés auprès de gestionnaires du serveur (4) de centralisation au cours d'une étape préalable de déclaration (71 bis) des serveurs (3) de joignabilité. Comme mentionné précédemment en référence au système selon l'invention, ces moyens (S) d'authentification du serveur (3) de joignabilité et/ou du serveur (4) de centralisation peuvent être intégré dans l'équipement (5) opérateur qui mettra en oeuvre au moins une de ces étapes d'authentification (72 et/ou 72bis), suite à une déclaration (71 et/ou 71 bis) des appelants (A2) et/ou des appelés (A1) et/ou des serveurs (3) de joignabilité, auprès de gestionnaires de l'équipement (5) opérateur.

Le procédé selon l'invention est mis en oeuvre lorsqu'un appelant (A2) requiert l'établissement (70) d'une communication (COM) avec un appelé (A1) via le(s) réseau(x) (RC) de communication. C'est pour gérer efficacement l'établissement (70) de cette communication (COM) que les moyens (MR) de redirection et la base de données (DB_U) utilisateurs sont implémentés dans l'équipement (5) opérateur. Lorsqu'un appelant (A2) requiert l'établissement (70) d'une communication (COM) avec un appelé (A1), via le(s) réseau(x) (RC) de communication, des moyens (20) de communication d'au moins un terminal (2) appelant mettent en oeuvre une étape d'envoi (73), via le(s) réseau(x) (RC) de communication, d'une requête (RT) d'établissement d'une communication, pour joindre au moins un appelé (A1) sur au moins un terminal (1) appelé et communiquer avec ce terminal (1) appelé. Dans d'autres cas, lorsqu'un appelant (A2) requiert l'établissement (70) d'une communication (COM) avec un appelé (A1), via le(s) réseau(x) (RC) de communication, des moyens (20) de communication d'au moins un terminal (2) appelant mettent en oeuvre une étape d'envoi (73bis), via le(s) réseau(x) (RC) de communication, d'une requête (NAPTR) d'obtention des identifiants (FQDN) de communication d'un appelé (A1), pour obtenir les identifiants (FQDN) de l'appelé (A1). Bien entendu, cette étape d'envoi (73bis), par le terminal (2) appelant, d'une requête (NAPTR) d'obtention des identifiants (FQDN) de communication d'un appelé (A1), peut être mise en oeuvre par l'appelant (A2) qui souhaite obtenir les identifiants (FQDN) de communication d'un appelé (A1) même sans requérir d'établissement (70) d'une communication, pour autant que le terminal (2) appelant le permette. Dans le mode de réalisation où le système comporte un terminal (2) appelant comportant un module (M2) de gestion appelant, lorsque l'appelant (A2) requiert l'établissement (70) d'une communication (COM) avec un appelé (A1), cet appelé (A1) est identifié par le module (M2) de gestion appelant, implémenté dans des moyens (21) de traitement de données du terminal (2) appelant, grâce à au moins un numéro unique (1ID) et/ou au moins un identifiant (FQDN) de communication, mémorisé(s) dans des moyens (23) de mémorisation du terminal (2) appelant. De façon connue en soi, l'appelé (A1) peut être identifié par les moyens (21) de traitement de données du terminal (2) appelant, grâce à au moins un numéro unique (1ID) et/ou au moins un identifiant (FQDN) de communication, mémorisé(s) dans des moyens (23) de mémorisation du terminal (2) appelant. Cependant, lorsque le terminal (2) appelant comporte un module (M2) de gestion, celui-ci permet de gérer le numéro unique (1ID) et/ou le(s) identifiant(s) (FQDN) de communication en fonction des réponses reçues du serveur (3) de joignabilité ou du serveur (4) de centralisation. Dans une variante de réalisation, le module (M2) de gestion permet également de gérer les données (DJ) de joignabilité de l'appelé (A1) éventuellement reçues du serveur (3) de joignabilité.

Dans un mode de réalisation de l'invention, l'étape (73) d'envoi de la requête (RT) d'établissement d'une communication s'accompagne de l'étape de consultation (51), par l'équipement (5) opérateur, de la base de données (DB_U) utilisateurs de l'équipement (5) opérateur. Lorsque l'appelé (A1) est identifié comme n'étant pas enregistré dans cette base de données (DB_U) utilisateurs, cette consultation (51) permet une étape de redirection (78) de la requête (RT), par les moyens (MR) de redirection de l'équipement (5) opérateur. Cette redirection (78) comporte une étape d'envoi d'une requête (NAPTR) d'obtention des identifiants (FQDN) de communication d'un appelé (A1), vers le serveur (4) de centralisation, pour consultation (96) de la base de données (DB_ENUM) centralisée, puisque l'appelé (A1) est identifié comme n'étant pas enregistré dans cette base de données (DB_U) utilisateurs. En revanche, lorsque l'appelé (A1) est identifié comme étant enregistré dans cette base de données (DB_U) utilisateurs, cette consultation permet une étape de redirection (79), par les moyens (MR) de redirection de l'équipement (5) opérateur, de cette requête (RT) vers le serveur (3) de joignabilité, pour consultation (96bis) de la base de données (DB_ENUM) centralisée par le module (M3) de gestion serveur ou pour consultation (96ter) de la base de données (DB_JOIN) de joignabilité par le module (M3) de gestion serveur. Dans ce cas, la consultation (96ter) de la base de données (DB_JOIN) de joignabilité permet d'envoyer au terminal (2) appelant au moins une partie des données (DJ) de joignabilité. Comme expliqué précédemment, en fonction du terminal (2) appelant et des paramètres enregistrés par l'appelé (A1) dans le serveur (3) de joignabilité, les données (DJ) de joignabilité envoyées dans ce cas pourront ne pas être limitées aux seuls identifiants (FQDN) de communication ou au numéro unique (1ID) mais pourront comporter, par exemple, certaines des données relatives au profil (P) et/ou à l'agenda (A) etc. De plus, les données (DJ) de joignabilité envoyées dans ce cas pourront être filtrées en fonction du terminal (2) appelant et des paramètres enregistrés par l'appelé (A1) dans le serveur (3) de joignabilité. Ainsi l'appelé (A1) pourra voir les différentes informations le concernant, enregistrées dans le serveur (3) de joignabilité, être délivrées ou non aux autres utilisateurs, en fonction de ce qu'il aura décidé au préalable.

Comme expliqué précédemment, lorsqu'un appelant (A2) requiert l'établissement (70) d'une communication (COM) avec un appelé (A1), via le(s) réseau(x) (RC) de communication, des moyens (20) de communication d'au moins un terminal (2) appelant que cet appelant (A2) utilise mettent en oeuvre une étape d'envoi (73bis), via le(s) réseau(x) (RC) de communication, vers au moins un serveur de centralisation, d'une requête (NAPTR) d'obtention des identifiants (FQDN) de communication d'un appelé (A1), pour obtenir les identifiants (FQDN) de l'appelé (A1). Dans une variante de réalisation, Cette étape d'envoi (73bis) d'une requête (NAPTR) d'obtention des identifiants (FQDN) de communication s'accompagne, lorsque cette requête (NAPTR) est adressée de façon erronée ou incomplète ou inadaptée au(x) réseau(x) (RC), d'une étape de consultation, par les moyens (MR) de redirection de l'équipement (5) opérateur, d'une base de données de l'équipement (5) opérateur stockant les serveurs de centralisation correspondant à une pluralité d'appelés (A1). Cette consultation permet d'identifier, en fonction de l'appelé (A1), le serveur (4) de centralisation vers lequel cette requête (NAPTR) doit être envoyée. Les moyens (MR) de redirection de l'équipement (5) opérateur permettent alors une étape de redirection (77) de cette requête (NAPTR) d'obtention des identifiants (FQDN) de communication vers ce serveur (4) identifié, pour consultation (96) de sa base de données (DB_ENUM) centralisée.

L'étape d'envoi (73bis) de la requête (NAPTR) d'obtention des identifiants (FQDN) de communication de l'appelé (A1), peut s'accompagner de l'étape de consultation (51), par l'équipement (5) opérateur, de la base de données (DB_U) utilisateurs. Lorsque l'appelé (A1) est identifié comme n'étant pas enregistré dans cette base de données (DB_U) utilisateurs, cette consultation (51) s'accompagne de l'étape de consultation (96) de la base de données (DB_ENUM) centralisée par le terminal (2) appelant. Lorsque l'appelé (A1) est identifié comme étant enregistré dans cette base de données (DB_U) utilisateurs, d'une étape de redirection (79), par les moyens (MR) de redirection de l'équipement (5) opérateur, de cette requête (NAPTR) vers le serveur (3) de joignabilité, pour consultation (96bis) de la base de données (DB_ENUM) centralisée par le module (M3) de gestion serveur ou pour consultation (96ter) de la base de données (DB_JOIN) de joignabilité par le module (M3) de gestion serveur. Comme expliqué précédemment pour la redirection (79) de la requête (RT) vers le serveur (3) de joignabilité, cette redirection (79) de la requête (NAPTR) vers le serveur (3) de joignabilité permet des fonctionnalités supplémentaires par rapport à ce qu'aurait permis une consultation (96) de la base de données (DB_ENUM) centralisée du serveur (4) de centralisation.

Comme déjà mentionné, la base de données (DB_U) utilisateurs et les moyens (MR) de redirection de transmission de données peuvent être intégrés dans des équipements (5') opérateurs autres que l'équipement (5) opérateur du présent système. Les étapes de consultation (51) de la base de données (DB_U) utilisateurs et de redirection (77, 78, 79) peuvent alors être mises en oeuvre par des équipements (5') opérateurs autres que l'équipement (5) opérateur du système, de façon à permettre une interopérabilité entre les différents opérateurs de communication.

Le procédé selon l'invention comporte une étape de consultation (96) de la base de données (DB_ENUM) centralisée par le terminal (2) appelant et/ou une étape de consultation (96bis) de la base de données (DB_ENUM) centralisée par le serveur (3) de joignabilité et/ou une étape de consultation (96ter) de la base de données (DB_JOIN) de joignabilité par le module (M3) de gestion serveur. Dans une variante possible, l'étape de consultation (96bis) de la base de données (DB_ENUM) centralisée ou l'étape de consultation (96ter) de la base de données (DB_JOIN) de joignabilité est précédée d'une étape d'authentification (72) des appelants (A2) ayant requis l'établissement (70) d'une communication (COM), par des moyens (S) d'authentification présents dans les moyens (31) de traitement de données du serveur (3) de joignabilité, comme mentionné précédemment. Cette étape (72) d'authentification permet de limiter l'accès à des appelants (A2) préalablement enregistrés par les appelés (A1), lors de l'étape (95) d'enregistrement des paramètres de confidentialité, comme étant autorisés à obtenir au moins une partie de leurs données (DJ) de joignabilité. L'étape de consultation (96) de la base de données (DB_ENUM) centralisée est mise en oeuvre par le serveur (4) de centralisation lui-même à la demande du terminal (2) appelant et l'étape de consultation (96bis) de la base de données (DB_ENUM) centralisée est mise en oeuvre par le serveur (4) de centralisation lui-même à la demande du serveur (3) de joignabilité. Ces étapes comportent chacune une étape de réception (91), par des moyens (40) de communication du serveur (4) de centralisation, via le(s) réseau(x) (RC) de communication, de la requête (NAPTR) d'obtention des identifiants (FQDN) de communication d'un appelé (A1) identifié par son numéro unique (1ID). Une étape de traitement (92) de la requête (NAPTR) d'obtention d'identifiants et d'identification du numéro unique (1ID) de l'appelé (A1) dans la base (DB_ENUM) de données centralisée, par les moyens (41) de traitement de données du serveur (4) de centralisation, permet alors une étape d'élaboration (93), par les moyens (41) de traitement de données du serveur (4) de centralisation, d'une réponse comprenant la liste (NAPTR_RR) d'identifiants (FQDN) correspondants. Cette liste (NAPTR_RR) est bien entendu automatiquement limitée en fonction des données (DJ) de joignabilité, grâce à l'étape de mise à jour (90) de la base (DB_ENUM) de données centralisée. Ensuite, les moyens (40) de communication du serveur (4) de centralisation mettent en oeuvre une étape d'envoi (94) de la réponse comprenant une liste (NAPTR_RR) d'identifiants (FQDN) de communication correspondant au numéro unique (1ID) de l'appelé (A1). Cet envoi (94) se fait bien entendu vers le terminal (2) lorsqu'il s'agit d'une consultation (96) de la base de données (DB_ENUM) centralisée par le terminal (2) appelant, mais se fait vers le serveur (3) de joignabilité lorsqu'il s'agit d'une consultation (96bis) de la base de données (DB_ENUM) centralisée par le serveur (3) de joignabilité. Par contre, l'étape de consultation (96ter) de la base de données (DB_JOIN) de joignabilité est mise en oeuvre par le serveur (3) de joignabilité lorsque le système comporte un terminal (2) appelant accédant au serveur (3) de joignabilité au lieu du serveur (4) de centralisation ou lorsque ce terminal (2) appelant a été redirigé vers le serveur (3) de joignabilité par l'équipement (5) opérateur. Cette consultation (96ter) comporte une étape de réception (91 bis), par les moyens (30) de communication du serveur (3) de joignabilité, via le(s) réseau(x) (RC) de communication, de la requête (NAPTR) d'obtention des identifiants (FQDN) de communication d'un appelé (A1) identifié par son numéro unique (1ID). Une étape de traitement (92bis) de la requête (NAPTR) d'obtention d'identifiants et d'identification du numéro unique (1ID) de l'appelé (A1) dans la base (DB_JOIN) de données de joignabilité, par le module (M3) de gestion serveur, permet alors une étape d'élaboration (93bis) d'une réponse comprenant la liste (NAPTR_RR) d'identifiants (FQDN) correspondants. Cette liste (NAPTR_RR) est bien entendu automatiquement limitée en fonction des données (DJ) de joignabilité puisqu'il s'agit ici d'une consultation de la base de données (DB_JOIN) de joignabilité. Enfin, les moyens (30) de communication du serveur (3) de joignabilité mettent en oeuvre une étape d'envoi (94bis) de la réponse comprenant une liste (NAPTR_RR) d'identifiants (FQDN) de communication correspondant au numéro unique (1ID) de l'appelé (A1) vers le terminal (2) appelant.

Dans les différentes variantes de réalisation décrites ci-dessus, lorsque le terminal (2) appelant a requis l'établissement (70) d'une communication (COM) avec un appelé (A1), via le(s) réseau(x) (RC) de communication, l'étape de consultation (96, 96bis) de la base de données (DB_ENUM) centralisée et/ou l'étape de consultation (96ter) de la base de données (DB_JOIN) de joignabilité est(sont) accompagnée(s) d'une étape de réception (74) par les moyens (20) de communication du terminal (2) appelant, de la réponse contenant la liste (NAPTR_RR) d'identifiants (FQDN) de communication de l'appelé (A1). Ensuite, dans la variante de réalisation où le terminal (2) appelant comporte une module (M2) de gestion appelant, ce dernier met en oeuvre une étape de traitement (75) de la réponse contenant la liste (NAPTR_RR) d'identifiants (FQDN) de communication de l'appelé (A1) et démarrage (76) d'une communication (COM), par un lanceur (M20) d'application du module (M2) de gestion appelant, gérant les moyens (20) de communication pour sélectionner le média correspondant à l'identifiant (FQDN) de communication prioritaire dans la liste (NAPTR_RR) reçue. Cette sélection par le lanceur (M20) d'application du terminal (2) appelant pourra être réalisée, comme expliqué précédemment en référence au système selon l'invention, de manière successive ou simultanée.

Dans le cas où le terminal (2) appelant ne permet pas le démarrage (76) d'une communication (COM) sur le média approprié, par un lanceur (M20) d'application du module (M2) de gestion appelant, l'invention prévoit que l'équipement (5) opérateur ait redirigé les transmissions de données vers le serveur (3) de joignabilité. Si le serveur (3) consulte alors le serveur (4) de centralisation, l'étape de consultation (96bis) de la base de données (DB_ENUM) centralisée par le serveur (3) de joignabilité est alors accompagnée d'une étape de réception et traitement (97), par le module (M3) de gestion serveur du serveur (3) de joignabilité, de la réponse contenant la liste (NAPTR_RR) d'identifiants (FQDN) de communication de l'appelé (A1). Si le serveur (3) consulte la base de données (DB_JOIN) de joignabilité au lieu de consulter le serveur (4) de centralisation, l'étape de consultation (96ter) de la base de données (DB_JOIN) de joignabilité est accompagnée d'une étape de traitement (97), par le module (M3) de gestion serveur du serveur (3) de joignabilité, de la liste (NAPTR_RR) d'identifiants (FQDN) de communication de l'appelé (A1). Ensuite, une étape de démarrage (98) d'une communication (COM), par un lanceur (M30) d'application du serveur (3) de joignabilité, permet de rediriger la communication (COM), via l'équipement (5) opérateur, sur un média correspondant à l'identifiant (FQDN) de communication prioritaire dans le profil (P) activé au cours de la tranche horaire (TH) à laquelle a lieu la requête (RT) d'établissement d'une communication (COM) par le terminal (2) appelant, lorsque le terminal (2) appelant est compatible avec ce média. Dans une variante de réalisation éventuelle, le lanceur (M30) d'application du serveur (3) de joignabilité pourra, par exemple en cas d'échec de la communication via le média prioritaire, comme expliqué précédemment pour le lanceur (M20) d'application du terminal (2) appelant, tenter d'établir la communication via un autre média, en effectuant une sélection de média de manière successive ou simultanée. En revanche, si le terminal (2) appelant utilise un média différent de celui correspondant à cet identifiant (FQDN) de communication prioritaire et si le terminal (2) appelant n'est pas compatible avec ce média, l'étape de démarrage (98) de la communication (COM), par le lanceur (M30) d'application, pourra comporter une étape de conversion (99), par des moyens (MC) de conversion de média du serveur (3) de joignabilité, des données transmises par le terminal (2) appelant en données compatibles avec ce média. Dans des modes de réalisation possibles, cette étape de conversion (99) pourra consister à exécuter au moins une des fonctions suivantes :
- boîte vocale d'enregistrement de message vocal (VO),
- reconnaissance vocale pour la conversion d'un message vocal (VO) en texte de message électronique (email) ou de message court (SMS) ou de message multimédia court (MMS),
- synthèse vocale pour la conversion d'un texte de message électronique (email) ou de message court (SMS) ou de message multimédia court (MMS) en message vocal (VO),
- convertisseur de message électronique (mail) en message court (SMS) ou réciproquement,
- convertisseur de message électronique en message multimédia court (MMS) ou réciproquement.

On comprend, à la lecture de la présente demande, que la présente invention a atteint les buts qu'elle s'était fixée en proposant différents modes de réalisation supprimant les inconvénients de l'art antérieur. Par exemple, en ce qui concerne l'impossibilité d'émettre des requêtes (NAPTR) directement vers un serveur (4) de centralisation, au travers d'un pare-feu, l'invention permet de contourner le problème en proposant un envoi de cette requête directement vers le serveur (3) de joignabilité. Ce dernier pourra alors consulter la base de données (DB_JOIN) de joignabilité pour renvoyer la liste des identifiants (FQDN) de communication de l'appelé (A1) ou pourra en général alors envoyer une requête (NAPTR) vers le serveur (4) de centralisation car les serveurs sont généralement agencés pour permettre des communications vers plus de ports que ne le permettent les terminaux des utilisateurs ou les réseaux locaux par lesquels ils se connectent. De même, lorsqu'un terminal (2) appelant envoie une requête (RT) d'établissement d'une communication, le serveur (3) de joignabilité pourra consulter la base de données (DB_JOIN) de joignabilité pour obtenir la liste des identifiants (FQDN) de communication de l'appelé (A1) et ou pourra consulter le serveur (4) de centralisation. De plus, comme expliqué dans les deux demandes déposées par la demanderesse en même temps que la présente demande, un équipement (5) opérateur pourra éventuellement générer lui-même une requête (NAPTR) d'obtention des identifiants (FQDN) de communication de l'appelé (A1) lorsqu'un terminal (2) appelant envoie une requête (RT) d'établissement d'une communication (COM). L'équipement opérateur pourra naturellement consulter aussi bien le serveur (3) de joignabilité que le serveur (4) de centralisation puisque ses ports ne seront pas limités par un pare-feu.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système de gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant, le système comportant :
• au moins un serveur (4) de centralisation, accessible via le(s) réseau(x) (RC) de communication et comprenant au moins une base (DB_ENUM) de données, dite centralisée, stockant des données relatives à une pluralité d'appelés (A1), ces données comportant, pour chaque appelé (A1), un identifiant principal, dit numéro unique (1ID), associé à au moins un identifiant (FQDN) de communication,
le système étant **caractérisé en ce qu'**il comporte :
• au moins un terminal (1) appelé, comportant des moyens (10) de communication via le(s) réseau(x) (RC) de communication, des moyens (11) de traitement de données, des moyens (12) interactifs pour le contrôle du terminal (1) communicant par l'appelé (A1) et des moyens (13) de mémorisation,
• au moins un module de gestion, dit module (M3) de gestion serveur, implémenté dans des moyens de traitement (31) d'au moins un serveur (3) de gestion de la joignabilité des appelés (A1), dit serveur (3) de joignabilité, comportant des moyens (30) de communication le rendant accessible via le(s) réseau(x) (RC) de communication, le module (M3) de gestion serveur contrôlant :
- un enregistrement dans des moyens (33) de mémorisation du serveur (3) de joignabilité, d'au moins certaines données, dites données (DJ) de joignabilité, parmi des données représentatives d'au moins un numéro unique (1ID), au moins un profil (P),
- une mise à jour des données stockées dans la base (DB_ENUM) de données centralisée du serveur (4) de centralisation, à partir des données (DJ) de joignabilité enregistrées dans une base de données (DB_JOIN), dite de joignabilité, des moyens (33) de mémorisation du serveur (3) de joignabilité, lors d'un changement par l'appelé (A1) d'au moins une des données (DJ) de joignabilité et/ou au cours du temps, lors du passage d'une tranche horaire (TH) à une autre.
• au moins un équipement (5) opérateur comportant des moyens (50) de transmission de données pour l'établissement de communications (COM) via le(s) réseau(x) (RC) de communication, des moyens (MR) de redirection de transmission de données et au moins une base de données, dite base de données (DB_U) utilisateurs, stockant des données identifiant les utilisateurs qui possèdent des données (DJ) de joignabilité, les moyens (MR) de redirection consultant cette base de données utilisateurs (DB_U) pour rediriger, au sein du(des) réseau(x) (RC) de communication, les transmissions de données entre les serveurs (3, 4) et/ou les terminaux (1, 2) du système,
• les données stockées dans la base de données (DB_JOIN) de joignabilité comportent également des données relatives à des paramètres de confidentialité du numéro unique (1ID) et des identifiants (FQDN) de communication de l'appelé (A1), ces données permettant aux appelés (A1) de définir les appelants (A2) autorisés à obtenir leurs données (DJ) de joignabilité et/ou de définir quelles données ils sont autorisés à obtenir parmi ces données (DJ) de joignabilité.

2. Système selon la revendication 1, **caractérisé en ce que** les moyens (33) de mémorisation du serveur (3) de joignabilité comportent au moins une base de données (DB_JOIN), dite de joignabilité, stockant des données relatives à une pluralité d'appelés (A1), ces données comportant des données (DJ) de joignabilité de chacun des appelés (A1), gérées par le module (M3) de gestion serveur générant des données compatibles avec les moyens (11) de traitement du terminal (1) appelé, ces données compatibles comportant au moins un type de données parmi les données (DJ) de joignabilité, le module (M3) de gestion contrôlant les moyens (30) de communication du serveur (3) de joignabilité pour des transmissions, avec le terminal (1) appelé, de ces données compatibles générées, ces transmissions permettant la sélection, par l'appelé (A1), grâce aux moyens (11) de traitement et aux moyens (12) interactifs de son terminal (1) appelé, des données à enregistrer dans la base de données (DB_JOIN) de joignabilité du serveur (3) de joignabilité, le module (M3) de gestion serveur générant également des données compatibles avec le serveur (4) de centralisation, pour la mise à jour de la base de données (DB_ENUM) du serveur (4) de centralisation à partir de la base de données (DB_JOIN) de joignabilité.

3. Système selon une des revendications 1 et 2, **caractérisé en ce que** les moyens (11) de traitement de données du terminal (1) appelé comportent également un module (M1) de gestion, dit module (M1) de gestion appelé, complémentaire du module (M3) de gestion serveur, les moyens (13) de mémorisation du terminal (1) appelé stockant au moins un type de données parmi les données (DJ) de joignabilité de l'appelé, le module (M1) de gestion appelé et le module (M3) de gestion serveur s'échangeant, via le(s) réseau(x) (RC) de communication, des données comportant au moins un type de données parmi les données (DJ) de joignabilité, pour l'enregistrement, dans la base de données (DB_JOIN) de joignabilité, des données représentatives des identifiants (FQDN) de communication de l'appelé (A1) et/ou de son numéro unique (11D) et/ou de son profil (P) et/ou de son agenda (A), sélectionnées par l'appelé (A1) sur le terminal (1) appelé, le module (M3) de gestion serveur générant également des données compatibles avec le serveur (4) de centralisation, pour la mise à jour de la base de données (DB_ENUM) du serveur (4) de centralisation à partir de la base de données (DB_JOIN) de joignabilité.

4. Système selon la revendication 3, **caractérisé en ce que** le module (M3) de gestion serveur contrôle les moyens (30) de communication pour l'envoi, vers le terminal (1) appelé, des données représentatives des identifiants (FQDN) de communication de l'appelé (A1) et/ou de son numéro unique (1ID) et/ou de son profil (P) et/ou de son agenda (A), lorsque ces données sont absentes des moyens (13) de mémorisation du terminal (1) appelé et/ou lorsque le module (M1) de gestion appelé le requiert.

5. Système selon une des revendications 3 et 4, **caractérisé en ce que** le module (M1) de gestion appelé contrôle les moyens (10) de communication du terminal (1) appelé pour l'envoi des données (DJ) de joignabilité sélectionnées par l'appelé (A1) vers le module (M3) de gestion serveur.

6. Système selon une des revendications 1 à 5, **caractérisé en ce que** le serveur (3) de joignabilité et le serveur (4) de centralisation constituent un seul et même serveur comportant les deux bases de données (DB_ENUM, DB_JOIN), ainsi que des moyens (31, 41) de traitement de données et des moyens (30, 40) de communication spécifiques à ces deux serveurs.

7. Système selon une des revendications 1 à 6, **caractérisé en ce que** le module (M3) de gestion serveur contrôle les moyens (30) de communication du serveur (3) de joignabilité pour la mise à jour de la base de données (DB_ENUM) du serveur (4) de centralisation.

8. Système selon une des revendications 1 à 7, **caractérisé en ce que** les moyens (31) de traitement de données du serveur (3) de joignabilité comportent également des moyens (S) d'authentification pour identifier les appelés (A1) enregistrant des données de joignabilité dans la base de données (DB_JOIN) du serveur (3) de joignabilité et limiter l'accès au module (M3) de gestion à des appelés (A1) préalablement enregistrés auprès de gestionnaires du serveur (3) de joignabilité.

9. Système selon une des revendications 1 à 8, **caractérisé en ce que** les données (DJ) de joignabilité comportent un profil (P) comprenant des données représentatives d'identifiants (FQDN) de communication de l'appelé (A1) triés selon un ordre de préférence et au moins un agenda (A) comprenant des données représentatives de tranches horaires (TH) et de paramètres relatifs à l'activation du (ou des) profil(s) (P) pendant les tranches horaires (TH), les données représentatives de l'ordre de préférence, des tranches horaires (TH) et de l'activation du profil (P) étant déterminées par l'appelé (A1) grâce au module (M3) de gestion et aux moyens (12) interactifs de son terminal (1) communicant,

10. Système selon une des revendications 1 à 9, **caractérisé en ce que** les moyens (MR) de redirection de l'équipement (5) opérateur, lorsqu'un appelant (A2) requiert l'établissement (70) d'une communication (COM) avec un appelé (A1) via le(s) réseau(x) (RC) de communication, permettent soit au terminal (2) appelant de consulter la base de données (DB_ENUM) centralisée, soit au serveur (3) de joignabilité de consulter la base de données (DB_ENUM) centralisée, soit au module (M3) de gestion serveur de consulter la base de données (DB_JOIN) de joignabilité.

11. Système selon les revendications 9 et 9, **caractérisé en ce que** les moyens (31) de traitement de données du serveur (3) de joignabilité comportent également des moyens (S) d'authentification pour identifier les appelants (A2) pour lesquels la base de données (DB_ENUM) centralisée ou la base de données (DB_JOIN) de joignabilité est consultée et limiter l'accès à des appelants (A2) préalablement enregistrés par les appelés (A1) dans les paramètres de confidentialité, comme étant autorisés à obtenir au moins une partie de leurs données (DJ) de joignabilité.

12. Système selon une des revendications 1 à 11, **caractérisé en ce que** le serveur (4) de centralisation comporte des moyens (S) d'authentification des serveurs (3) de joignabilité dont le module (M3) met à jour la base de données (DB_ENUM) centralisée, de façon à limiter l'accès à des serveurs (3) de joignabilité préalablement enregistrés auprès de gestionnaires du serveur (4) de centralisation.

13. Système selon une des revendications 1 à 12, **caractérisé en ce que** le serveur (3) de joignabilité est implémenté dans l'équipement (5) opérateur.

14. Système selon une des revendications 1 à 13, **caractérisé en ce que** le serveur (4) de centralisation est implémenté dans l'équipement (5) opérateur.

15. Système selon une des revendications 1 à 14, **caractérisé en ce que** les moyens (50) de transmission de données et/ou les moyens (MR) de redirection de l'équipement (5) opérateur supportent au moins un média de communication, fonctionnant selon au moins un protocole de communication, le(s) média supporté(s) consistant en au moins un média parmi les suivants :
- Internet,
- messagerie électronique,
- messagerie électronique instantanée,
- téléphonie,
- téléphonie mobile.

16. Système selon une des revendications 1 à 15, **caractérisé en ce que** l'équipement (5) opérateur comporte une base de données stockant les serveurs de centralisation correspondant à une pluralité d'appelés (A1), cette base de données étant consultée par les moyens (MR) de redirection, lorsque des moyens (20) de communication d'au moins un terminal (2) appelant envoient, vers au moins un serveur de centralisation, une requête (NAPTR) d'obtention des identifiants (FQDN) de communication d'un appelé (A1) erronée ou incomplète ou inadaptée au(x) réseau(x) (RC), pour identifier, en fonction de l'appelé (A1), le serveur de centralisation vers lequel cette requête (NAPTR) doit être envoyée et rediriger cette requête (NAPTR) d'obtention des identifiants (FQDN) de communication vers ce serveur identifié.

17. Système selon une des revendications 1 à 16, **caractérisé en ce que** les moyens (MR) de redirection de l'équipement (5) opérateur sont activés lorsque des moyens (20) de communication d'au moins un terminal (2) appelant envoient une requête (RT) d'établissement d'une communication vers les moyens (50) de transmission de données de l'équipement (5) opérateur, pour joindre au moins un appelé (A1) sur au moins un terminal (1) appelé et communiquer avec ce terminal (1) appelé via le(s) réseau(x) (RC) de communication, les moyens (MR) de redirection consultant alors la base de données (DB_U) utilisateurs, pour envoyer une requête (NAPTR) d'obtention des identifiants (FQDN) de communication d'un appelé (A1) :
- vers le serveur (4) de centralisation pour consultation de la base de données (DB_ENUM) centralisée, lorsque l'appelé (A1) est identifié comme n'étant pas enregistré dans cette base de données (DB_U) utilisateurs, ou
- vers le serveur (3) de joignabilité pour consultation de la base de données (DB_JOIN) de joignabilité, lorsque l'appelé (A1) est identifié comme étant enregistré dans cette base de données (DB_U) utilisateurs.

18. Système selon une des revendications 1 à 17, **caractérisé en ce que** les moyens (MR) de redirection de l'équipement (5) opérateur sont activés lorsque des moyens (20) de communication d'au moins un terminal (2) appelant envoient une requête (NAPTR) d'obtention des identifiants (FQDN) de communication d'un appelé (A1), pour obtenir les identifiants (FQDN) de l'appelé (A1), les moyens (MR) de redirection consultant alors la base de données (DB_U) utilisateurs, pour transmettre cette requête (NAPTR) :
- vers le serveur (4) de centralisation pour consultation de la base de données (DB_ENUM) centralisée, lorsque l'appelé (A1) est identifié comme n'étant pas enregistré dans cette base de données (DB_U) utilisateurs, ou
- vers le serveur (3) de joignabilité pour consultation de la base de données (DB_JOIN) de joignabilité ou pour consultation de la base de données (DB_ENUM) centralisée par le serveur (3) de joignabilité, lorsque l'appelé (A1) est identifié comme étant enregistré dans cette base de données (DB_U) utilisateurs.

19. Système selon une des revendications 1 à 18, **caractérisé en ce que** les moyens (MR) de redirection des communications sont également implémentés dans d'autres équipements (5') opérateurs que l'équipement (5) opérateur du système, de façon à permettre une interopérabilité entre les différents opérateurs de communication.

20. Système selon une des revendications 1 à 19, **caractérisé en ce que** le serveur (4) de centralisation comporte :
- des moyens (40) de communication, via le(s) réseau(x) (RC) de communication, pour la réception de requêtes (NAPTR) d'obtention des identifiants (FQDN) de communication d'un appelé (A1) identifié par son numéro unique (1ID), pour l'envoi d'une réponse comprenant au moins une liste (NAPTR_RR) d'identifiants (FQDN) de communication correspondant au numéro unique (1ID) de l'appelé (A1) et pour la réception de mises à jour de la base de données (DB_ENUM) centralisée à partir de la base de données (DB_JOIN) de joignabilité,
- des moyens (41) de traitement de données pour le traitement des requêtes (NAPTR) d'obtention d'identifiants, l'identification du numéro unique (1ID) de l'appelé (A1) et l'élaboration de la réponse comprenant la liste (NAPTR_RR) d'identifiants (FQDN) correspondants.

21. Système selon une des revendications 1 à 20, **caractérisé en ce que**, d'une part, les moyens (30) de communication du serveur (3) de joignabilité sont également agencés pour la réception de requêtes (NAPTR) d'obtention des identifiants (FQDN) de communication d'un appelé (A1) identifié par son numéro unique (1ID), l'envoi d'une réponse comprenant au moins une liste (NAPTR_RR) d'identifiants (FQDN)de communication correspondant au numéro unique (1ID) de l'appelé (A1) et, d'autre part, les moyens (31) de traitement du serveur (3) de joignabilité sont également agencés pour le traitement des requêtes (NAPTR) d'obtention d'identifiants, l'identification du numéro unique (1ID) de l'appelé (A1) et l'élaboration de la réponse comprenant au moins la liste (NAPTR_RR) d'identifiants (FQDN) correspondant à cet appelé (A1).

22. Système selon une des revendications 1 à 21, **caractérisé en ce qu'**il comporte également au moins un terminal (2) appelant, comportant :
- des moyens (20) de communication via le(s) réseau(x) (RC) de communication pour joindre au moins un appelé (A1) sur au moins un terminal (1) appelé, grâce à des requêtes (RT) d'établissement de communication, et communiquer avec ce terminal (1) appelé au travers d'au moins un média, et/ou pour envoyer des requêtes (NAPTR) d'obtention des identifiants (FQDN) de communication d'un appelé (A1) directement vers le serveur (3) de joignabilité et/ou le serveur (4) de centralisation et pour recevoir des réponses contenant des listes (NAPTR_RR) d'identifiants (FQDN) de communication,
- des moyens (21) de traitement de données comportant un module de gestion, dit module (M2) de gestion appelant, comportant un lanceur (M20) d'application gérant les moyens (20) de communication pour sélectionner le média correspondant à l'identifiant (FQDN) de communication prioritaire dans une liste (NAPTR_RR) reçue.

23. Système selon la revendication 22, **caractérisé en ce que** le module (M2) de gestion appelant, gère au moins un numéro unique (1ID) et/ou au moins un identifiant (FQDN) de communication, correspondant à au moins un appelé (A1) et mémorisé(s) dans des moyens (23) de mémorisation du terminal (2) appelant.

24. Système selon une des revendications 1 à 23, **caractérisé en ce que** le module (M3) de gestion serveur, activé lors de la consultation de la base de données (DB_ENUM) centralisée ou de la consultation de la base de données (DB_JOIN) de joignabilité, d'une part, est également agencé pour la réception et/ou le traitement de la réponse contenant la liste (NAPTR_RR) d'identifiants (FQDN) de communication de l'appelé (A1) et, d'autre part, comporte un lanceur (M30) d'application agencé pour rediriger la communication (COM), via l'équipement (5) opérateur, sur un média correspondant à l'identifiant (FQDN) de communication prioritaire dans le profil (P) activé au cours de la tranche horaire (TH) à laquelle l'appelant (A2) a requis une communication (COM), lorsque le terminal (2) appelant est compatible avec ce média.

25. Système selon la revendication 24, **caractérisé en ce que** le lanceur (M30) d'application du serveur (3) de joignabilité comporte des moyens (MC) de conversion de média, activés lorsque, d'une part, le terminal (2) appelant, émetteur de la requête (RT) d'établissement d'une communication (COM), utilise un média différent de celui correspondant à l'identifiant (FQDN) de communication prioritaire dans le profil (P) activé au cours de la tranche horaire (TH) à laquelle a lieu la requête (RT) d'établissement d'une communication (COM) par le terminal (2) appelant et, d'autre part, le terminal (2) appelant n'est pas compatible avec ce média, de façon à convertir les données transmises par le terminal (2) appelant en données compatibles avec ce média.

26. Procédé de gestion de la joignabilité d'au moins un utilisateur, dit appelé (A1), sur au moins un terminal (1) communicant, dit terminal (1) appelé, via au moins un réseau (RC) de communication, pour la joignabilité de l'appelé (A1) par au moins un utilisateur, dit appelant (A2), sur au moins un terminal (2) communicant, dit terminal (2) appelant, mis en oeuvre par un système comportant :
- au moins un terminal (1) appelé comportant des moyens (10) de communication via le(s) réseau(x) (RC) de communication, des moyens (11) de traitement de données, des moyens (12) interactifs pour le contrôle du terminal (1) communicant par l'appelé (A1) et des moyens (13) de mémorisation,
- au moins un serveur (4) de centralisation, accessible via le(s) réseau(x) (RC) de communication et comprenant au moins une base (DB_ENUM) de données, dite centralisée, stockant des données relatives à une pluralité d'appelés (A1), ces données comportant, pour chaque appelé (A1), un identifiant principal, dit numéro unique (1ID), associé à au moins un identifiant (FQDN) de communication,
- au moins un module de gestion, dit module (M3) de gestion serveur, implémenté dans des moyens de traitement (31) d'au moins un serveur (3) de gestion de la joignabilité des appelés (A1), dit serveur (3) de joignabilité, comportant des moyens (30) de communication le rendant accessible via le(s) réseau(x) (RC) de communication,
le procédé étant **caractérisé en ce qu'**il comporte les étapes suivantes :
- enregistrement (80), par le module (M3) de gestion, dans des moyens (33) de mémorisation du serveur (3) de joignabilité, d'au moins certaines données, dites données (DJ) de joignabilité, parmi des données représentatives d'au moins un numéro unique (1ID) et d'au moins un profil (P)
- mise à jour (90), par le module (M3) de gestion, des données stockées dans la base (DB_ENUM) de données centralisée du serveur (4) de centralisation, à partir des données (DJ) de joignabilité enregistrées dans les moyens (33) de mémorisation du serveur (3) de gestion, lors d'un changement par l'appelé (A1) d'au moins une des données (DJ) de joignabilité et/ou au cours du temps, lors du passage d'une tranche horaire (TH) à une autre
- consultation (51), par au moins un équipement (5) opérateur, d'au moins une base de données de l'équipement (5) opérateur, dite base de données (DB_U) utilisateurs, stockant des données identifiant les utilisateurs qui possèdent des données (DJ) de joignabilité, suivie d'au moins une étape de redirection (77, 78, 79) de transmissions de données entre les serveurs (3, 4) et/ou les terminaux (1, 2) du système, par des moyens (MR) de redirection de transmission de données de l'équipement (5) opérateur, pour l'établissement (70) de communications (COM) via le(s) réseau(x) (RC) de communication, par des moyens (50) de transmission de données de l'équipement (5) opérateur,
- l'étape d'enregistrement (80) du profil (P) dans la base de données (DB_JOIN) de joignabilité comporte également une étape d'enregistrement (95) de données relatives à des paramètres de confidentialité du numéro unique (1ID) et des identifiants (FQDN) de communication de l'appelé (A1), ces données permettant aux appelés (A1) de définir les appelants (A2) autorisés à obtenir leurs données (DJ) de joignabilité et/ou de définir quelles données ils sont autorisés à obtenir parmi ces données (DJ) de joignabilité..

27. Procédé selon la revendication 26, **caractérisé en ce que** les moyens (33) de mémorisation du serveur (3) de gestion comportent au moins une base de données (DB_JOIN), dite de joignabilité, stockant des données relatives à une pluralité d'appelés (A1), ces données comportant des données (DJ) de joignabilité de chacun des appelés (A1), gérées par le module (M3) de gestion serveur (3) de gestion, ce dernier permettant la mise en oeuvre des étapes suivantes :
- création (81), par le module (M3) de gestion serveur, de données compatibles avec les moyens (11) de traitement du terminal (1) appelé et comportant au moins un type de données parmi les données (DJ) de joignabilité,
- transmission (82) de ces données compatibles générées vers le terminal (1) appelé, via le(s) réseau(x) (RC) de communication,
- sélection (83) parmi les données transmises, par l'appelé (A1), grâce aux moyens (11) de traitement et aux moyens (12) interactifs de son terminal (1) appelé, des données à enregistrer dans la base de données (DB_JOIN) de joignabilité du serveur (3) de gestion,
- transmission (84) des données sélectionnées par le terminal (1) appelé vers le module (M3) de gestion serveur, via le(s) réseau(x) (RC) de communication, puis enregistrement (80), par le module (M3) de gestion serveur, de ces données dans la base de données (DB_JOIN) du serveur (3) de joignabilité,
- création (85), par le module (M3) de gestion serveur, de données compatibles avec le serveur (4) de centralisation, pour la mise à jour (90) de la base de données (DB_ENUM) du serveur (4) de centralisation à partir de la base de données (DB_JOIN) de joignabilité.

28. Procédé selon la revendication 26, **caractérisé en ce que** les moyens (33) de mémorisation du serveur (3) de gestion comportent au moins une base de données (DB_JOIN), dite de joignabilité, stockant des données relatives à une pluralité d'appelés (A1), ces données comportant des données (DJ) de joignabilité de chacun des appelés (A1), gérées par le module (M3) de gestion serveur, les moyens (13) de mémorisation du terminal (1) appelé stockant au moins un type de données parmi les données (DJ) de joignabilité de l'appelé (A1), les moyens (11) de traitement du terminal (1) appelé comportant également un module (M1) de gestion, appelé module (M1) de gestion appelé, complémentaire du module (M3) de gestion serveur, le module (M1) de gestion appelé et le module (M3) de gestion serveur permettant la mise en oeuvre des étapes suivantes :
- sélection (83) par l'appelé (A1), grâce au module (M1) de gestion appelé contrôlant les moyens (12) interactifs et les moyens (13) de mémorisation de son terminal (1) appelé, parmi les données (DJ) de joignabilité stockées dans les moyens (13) de mémorisation du terminal (1) appelé, des données à enregistrer dans la base de données (DB_JOIN) de joignabilité du serveur (3) de gestion,
- transmission (84) des données sélectionnées par le terminal (1) appelé vers le module (M3) de gestion serveur, via le(s) réseau(x) (RC) de communication, puis enregistrement (80), par le module (M3) de gestion serveur, de ces données dans la base de données (DB_JOIN) du serveur (3) de joignabilité,
- création (85), par le module (M3) de gestion serveur, de données compatibles avec le serveur (4) de centralisation, pour la mise à jour (90) de la base de données (DB_ENUM) du serveur (4) de centralisation à partir de la base de données (DB_JOIN) de joignabilité.

29. Procédé selon la revendication 28, **caractérisé en ce qu'**il comporte une étape d'envoi (82bis), par les moyens (30) de communication du serveur (3) de joignabilité, vers le terminal (1) appelé, des données représentatives des identifiants (FQDN) de communication de l'appelé (A1) et/ou de son numéro unique (1ID) et/ou de son profil (P) et/ou de son agenda (A), lorsque le terminal (1) appelé ne stocke pas ces données et/ou lorsque le module (M1) de gestion appelé le requiert.

30. Procédé selon une des revendications 26 à 29, **caractérisé en ce qu'**il comporte une étape d'implémentation, dans un serveur, des deux bases de données (DB_ENUM, DB_JOIN), ainsi que des moyens (31, 41) de traitement de données et des moyens (30, 40) de communication spécifiques du serveur (3) de joignabilité et du serveur (4) de centralisation qui constituent alors un seul et même serveur, l'étape de création (85) de données compatibles avec le serveur (4) de centralisation consistant alors en une conversion d'au moins une partie des données de la base de données (DB_JOIN) de joignabilité en données de la base de données (DB_ENUM) et l'étape de mise à jour (90) de la base de données (DB_ENUM) du serveur (4) de centralisation consistant en un enregistrement de ces données converties dans la base de données (DB_ENUM).

31. Procédé selon une des revendications 26 à 29, **caractérisé en ce que** l'étape de mise à jour (90) comporte une étape de transmission (86), via le(s) réseau(x) (RC) de communication, de données représentatives des identifiants (FQDN) de communication de l'appelé (A1) et/ou de son numéro unique (1ID), par le module (M3) de gestion serveur vers des moyens (40) de communication du serveur (4) de centralisation.

32. Procédé selon une des revendications 27 à 31, **caractérisé en ce que** l'étape de transmission (84) de données pour l'enregistrement (80) dans la base de données (DB_JOIN) de joignabilité comporte une étape d'authentification (72) de l'appelé (A1) accédant au serveur (3) de joignabilité, par des moyens (S) d'authentification présents dans les moyens (31) de traitement de données du serveur (3) de joignabilité, de façon à limiter l'accès à des appelés (A1) préalablement enregistrés auprès de gestionnaires du serveur (3) de joignabilité au cours d'une étape préalable de déclaration (71) des appelés (A1).

33. Procédé selon une des revendications 26 à 32, **caractérisé en ce que** les données de joignabilité comprenent un profil (P) comprenant des données représentatives d'identifiants (FQDN) de communication de l'appelé (A1) triés selon un ordre de préférence et au moins un agenda (A) comprenant des données représentatives de tranches horaires (TH) et de paramètres relatifs à l'activation du (ou des) profil(s) (P) pendant les tranches horaires (TH), les données représentatives de l'ordre de préférence, des tranches horaires (TH) et de l'activation du profil (P) étant déterminées par l'appelé (A1) grâce au module (M3) de gestion et aux moyens (12) interactifs de son terminal (1) communicant,

34. Procédé selon une des revendications 26 à 33, **caractérisé en ce qu'**il comporte au moins une étape des étapes suivantes, mise en oeuvre lorsqu'un appelant (A2) requiert l'établissement (70) d'une communication (COM) avec un appelé (A1) via le(s) réseau(x) (RC) de communication :
- consultation (96) de la base de données (DB_ENUM) centralisée par un terminal (2) appelant,
- consultation (96bis) de la base de données (DB_ENUM) centralisée par le serveur (3) de joignabilité,
- consultation (96ter) de la base de données (DB_JOIN) de joignabilité par le module (M3) de gestion serveur.

35. Procédé selon les revendications 33 et 34, **caractérisé en ce que** l'étape de consultation (96bis) de la base de données (DB_ENUM) centralisée ou l'étape de consultation (96ter) de la base de données (DB_JOIN) de joignabilité est précédée d'une étape d'authentification (72) des appelants (A2) ayant requis l'établissement (70) d'une communication (COM), par des moyens (S) d'authentification présents dans les moyens (31) de traitement de données du serveur (3) de joignabilité, de façon à limiter l'accès à des appelants (A2) préalablement enregistrés par les appelés (A1), lors de l'étape (95) d'enregistrement des paramètres de confidentialité, comme étant autorisés à obtenir au moins une partie de leurs données (DJ) de joignabilité.

36. Procédé selon une des revendications 31 à 35, **caractérisé en ce que** l'étape de transmission (86) de données pour la mise à jour (90) de la base de données (DB_ENUM) centralisée comporte une étape d'authentification (72bis) du serveur (3) de joignabilité, par des moyens (S) d'authentification du serveur (4) de centralisation, de façon à limiter l'accès à des serveurs (3) de joignabilité préalablement enregistrés auprès de gestionnaires du serveur (4) de centralisation au cours d'une étape préalable de déclaration (71 bis) des serveurs (3) de joignabilité.

37. Procédé selon une des revendications 26 à 36, **caractérisé en ce qu'**il comporte une étape d'implémentation du serveur (3) de joignabilité dans l'équipement (5) opérateur.

38. Procédé selon une des revendications 26 à 37, **caractérisé en ce qu'**il comporte une étape d'implémentation du serveur (4) de centralisation dans l'équipement (5) opérateur.

39. Procédé selon une des revendications 26 à 38, **caractérisé en ce que** l'étape d'établissement (70) d'une communication (COM) via le(s) réseau(x) (RC) de communication, grâce aux moyens (50) de transmission de données de l'équipement (5) opérateur, comporte au moins une étape de transmission de données sur au moins un média de communication, fonctionnant selon au moins un protocole de communication, le(s) média supporté(s) consistant en au moins un média parmi les suivants :
- Internet,
- messagerie électronique,
- messagerie électronique instantanée,
- téléphonie,
- téléphonie mobile.

40. Procédé selon une des revendications 26 à 39, **caractérisé en ce que**, lorsqu'un appelant (A2) requiert l'établissement (70) d'une communication (COM) avec un appelé (A1), via le(s) réseau(x) (RC) de communication, des moyens (20) de communication d'au moins un terminal (2) appelant que cet appelant (A2) utilise mettent en oeuvre une étape d'envoi (73), via le(s) réseau(x) (RC) de communication, vers au moins un équipement opérateur, d'une requête (RT) d'établissement d'une communication, pour joindre au moins un appelé (A1) sur au moins un terminal (1) appelé et communiquer avec ce terminal (1) appelé.

41. Procédé selon la revendication 40, **caractérisé en ce que** l'étape (73) d'envoi de la requête (RT) d'établissement d'une communication s'accompagne de l'étape de consultation (51), par l'équipement (5) opérateur, de la base de données (DB_U) utilisateurs de l'équipement (5) opérateur, puis, lorsque l'appelé (A1) est identifié comme n'étant pas enregistré dans cette base de données (DB_U) utilisateurs, d'une étape de redirection (78), par les moyens (MR) de redirection de l'équipement (5) opérateur, cette redirection (78) comportant une étape d'envoi d'une requête (NAPTR) d'obtention des identifiants (FQDN) de communication d'un appelé (A1), vers le serveur (4) de centralisation, pour consultation (96) de la base de données (DB_ENUM) centralisée.

42. Procédé selon la revendication 40, **caractérisé en ce que** l'étape (73) d'envoi de la requête (RT) d'établissement d'une communication s'accompagne de l'étape de consultation (51), par l'équipement (5) opérateur, de la base de données (DB_U) utilisateurs de l'équipement (5) opérateur, puis, lorsque l'appelé (A1) est identifié comme étant enregistré dans cette base de données (DB_U) utilisateurs, d'une étape de redirection (79), par les moyens (MR) de redirection de l'équipement (5) opérateur, de cette requête (RT) vers le serveur (3) de joignabilité, pour consultation (96bis) de la base de données (DB_ENUM) centralisée par le module (M3) de gestion serveur ou pour consultation (96ter) de la base de données (DB_JOIN) de joignabilité par le module (M3) de gestion serveur.

43. Procédé selon une des revendications 26 à 39, **caractérisé en ce que**, lorsqu'un appelant (A2) requiert l'établissement (70) d'une communication (COM) avec un appelé (A1), via le(s) réseau(x) (RC) de communication, des moyens (20) de communication d'au moins un terminal (2) appelant que cet appelant (A2) utilise mettent en oeuvre une étape d'envoi (73bis), via le(s) réseau(x) (RC) de communication, vers au moins un serveur de centralisation, d'une requête (NAPTR) d'obtention des identifiants (FQDN) de communication d'un appelé (A1), pour obtenir les identifiants (FQDN) de l'appelé (A1).

44. Procédé selon la revendication 43, **caractérisé en ce que** l'étape d'envoi (73bis) d'une requête (NAPTR) d'obtention des identifiants (FQDN) de communication d'un appelé (A1), vers au moins un serveur de centralisation, s'accompagne, lorsque cette requête (NAPTR) est adressée de façon erronée ou incomplète ou inadaptée au(x) réseau(x) (RC), d'une étape de consultation, par les moyens (MR) de redirection de l'équipement (5) opérateur, d'une base de données de l'équipement (5) opérateur stockant les serveurs de centralisation correspondant à une pluralité d'appelés (A1), pour identifier, en fonction de l'appelé (A1), le serveur (4) de centralisation vers lequel cette requête (NAPTR) doit être envoyée, puis d'une étape de redirection (77), par les moyens (MR) de redirection de l'équipement (5) opérateur, de cette requête (NAPTR) d'obtention des identifiants (FQDN) de communication vers ce serveur identifié, pour consultation (96) de sa base de données (DB_ENUM) centralisée.

45. Procédé selon la revendication 43, **caractérisé en ce que** l'étape d'envoi (73bis) de la requête (NAPTR) d'obtention des identifiants (FQDN) de communication de l'appelé (A1), s'accompagne de l'étape de consultation (51), par l'équipement (5) opérateur, de la base de données (DB_U) utilisateurs de l'équipement (5) opérateur, puis, lorsque l'appelé (A1) est identifié comme n'étant pas enregistré dans cette base de données (DB_U) utilisateurs, de l'étape de consultation (96) de la base de données (DB_ENUM) centralisée par le terminal (2) appelant.

46. Procédé selon la revendication 43, **caractérisé en ce que** l'étape d'envoi (73bis) de la requête (NAPTR) d'obtention des identifiants (FQDN) de communication d'un appelé (A1) s'accompagne de l'étape de consultation (51), par l'équipement (5) opérateur, de la base de données (DB_U) utilisateurs de l'équipement (5) opérateur, puis, lorsque l'appelé (A1) est identifié comme étant enregistré dans cette base de données (DB_U) utilisateurs, d'une étape de redirection (79), par les moyens (MR) de redirection de l'équipement (5) opérateur, de cette requête (NAPTR) vers le serveur (3) de joignabilité, pour consultation (96bis) de la base de données (DB_ENUM) centralisée par le module (M3) de gestion serveur ou pour consultation (96ter) de la base de données (DB_JOIN) de joignabilité par le module (M3) de gestion serveur.

47. Procédé selon une des revendications 26 à 46, **caractérisé en ce que** les étapes de consultation (51) de la base de données (DB_U) utilisateurs et de redirection (77, 78, 79) sont mises en oeuvre par des équipements (5') opérateurs autres que l'équipement (5) opérateur du système et comportant au moins une base de données (DB_U) utilisateurs et des moyens (MR) de redirection de transmission de données, de façon à permettre une interopérabilité entre les différents opérateurs de communication.

48. Procédé selon une des revendications 34 à 47, **caractérisé en ce que** l'étape de consultation (96, 96bis) de la base de données (DB_ENUM) centralisée comporte les étapes suivantes :
- réception (91), par des moyens (40) de communication du serveur (4) de centralisation, via le(s) réseau(x) (RC) de communication, de la requête (NAPTR) d'obtention des identifiants (FQDN) de communication d'un appelé (A1) identifié par son numéro unique (1ID),
- traitement (92) de la requête (NAPTR) d'obtention d'identifiants et identification du numéro unique (1ID) de l'appelé (A1) dans la base (DB_ENUM) de données centralisée, par des moyens (41) de traitement de données du serveur (4) de centralisation,
- élaboration (93) d'une réponse comprenant la liste (NAPTR_RR) d'identifiants (FQDN) correspondants, cette liste (NAPTR_RR) étant automatiquement limitée en fonction des données (DJ) de joignabilité, grâce à l'étape de mise à jour (90) de la base (DB_ENUM) de données centralisée,
- envoi (94), par les moyens (40) de communication du serveur (4) de centralisation, de la réponse comprenant une liste (NAPTR_RR) d'identifiants (FQDN) de communication correspondant au numéro unique (1ID) de l'appelé (A1).

49. Procédé selon une des revendications 34 à 47, **caractérisé en ce que** l'étape de consultation (96ter) de la base de données (DB_JOIN) de joignabilité comporte les étapes suivantes:
- réception (91 bis), par les moyens (30) de communication du serveur (3) de joignabilité, via le(s) réseau(x) (RC) de communication, de la requête (NAPTR) d'obtention des identifiants (FQDN) de communication d'un appelé (A1) identifié par son numéro unique (1ID),
- traitement (92bis) de la requête (NAPTR) d'obtention d'identifiants et identification du numéro unique (1ID) de l'appelé (A1) dans la base (DB_JOIN) de données de joignabilité, par le module (M3) de gestion serveur,
- élaboration (93bis) d'une réponse comprenant au moins la liste (NAPTR_RR) d'identifiants (FQDN) correspondants, cette liste (NAPTR_RR) étant automatiquement limitée en fonction des données (DJ) de joignabilité, grâce à l'étape d'enregistrement (80) des données (DJ) de joignabilité,
- envoi (94bis), par les moyens (30) de communication du serveur (3) de joignabilité, de la réponse comprenant au moins une liste (NAPTR_RR) d'identifiants (FQDN) de communication correspondant au numéro unique (1ID) de l'appelé (A1).

50. Procédé selon une des revendications 34 à 49, **caractérisé en ce que** l'étape de consultation (96, 96bis) de la base de données (DB_ENUM) centralisée et/ou l'étape de consultation (96ter) de la base de données (DB_JOIN) de joignabilité est(sont) accompagnée(s) des étapes suivantes :
- réception (74) par les moyens (20) de communication du terminal (2) appelant, de la réponse contenant la liste (NAPTR_RR) d'identifiants (FQDN) de communication de l'appelé (A1),
- traitement (75), par le module (M2) de gestion appelant du terminal (2) appelant, de la réponse contenant la liste (NAPTR_RR) d'identifiants (FQDN) de communication de l'appelé (A1) et démarrage (76) d'une communication (COM), par un lanceur (M20) d'application du module (M2) de gestion appelant, gérant les moyens (20) de communication pour sélectionner le média correspondant à l'identifiant (FQDN) de communication prioritaire dans la liste (NAPTR_RR) reçue.

51. Procédé selon la revendication 50, **caractérisé en ce que** lorsque l'appelant (A2) requiert l'établissement (70) d'une communication (COM) avec un appelé (A1), cet appelé (A1) étant identifié par le module (M2) de gestion appelant, implémenté dans des moyens (21) de traitement de données du terminal (2) appelant, grâce à au moins un numéro unique (1ID) et/ou au moins un identifiant (FQDN) de communication, mémorisé(s) dans des moyens (23) de mémorisation du terminal (2) appelant.

52. Procédé selon une des revendications 34 à 49, **caractérisé en ce que** l'étape de consultation (96bis) de la base de données (DB_ENUM) centralisée par le serveur (3) de joignabilité est accompagnée des étapes suivantes :
- réception et traitement (97), par le module (M3) de gestion serveur du serveur (3) de joignabilité, de la réponse contenant la liste (NAPTR_RR) d'identifiants (FQDN) de communication de l'appelé (A1),
- démarrage (98) d'une communication (COM), par un lanceur (M30) d'application du serveur (3) de joignabilité, pour rediriger la communication (COM), via l'équipement (5) opérateur, sur un média correspondant à l'identifiant (FQDN) de communication prioritaire dans le profil (P) activé au cours de la tranche horaire (TH) à laquelle a lieu la requête (RT) d'établissement d'une communication (COM) par le terminal (2) appelant, lorsque le terminal (2) appelant est compatible avec ce média.

53. Procédé selon une des revendications 34 à 49, **caractérisé en ce que** l'étape de consultation (96ter) de la base de données (DB_JOIN) de joignabilité est accompagnée des étapes suivantes :
- traitement (97), par le module (M3) de gestion serveur du serveur (3) de joignabilité, de la liste (NAPTR_RR) d'identifiants (FQDN) de communication de l'appelé (A1),
- démarrage (98) d'une communication (COM), par un lanceur (M30) d'application du serveur (3) de joignabilité, pour rediriger la communication (COM), via l'équipement (5) opérateur, sur un média correspondant à l'identifiant (FQDN) de communication prioritaire dans le profil (P) activé au cours de la tranche horaire (TH) à laquelle a lieu la requête (RT) d'établissement d'une communication (COM) par le terminal (2) appelant, lorsque le terminal (2) appelant est compatible avec ce média.

54. Procédé selon une des revendications 52 et 53, **caractérisé en ce que** l'étape de démarrage (98) de la communication (COM), par le lanceur (M30) d'application, comporte une étape de conversion (99), par des moyens (MC) de conversion de média du serveur (3) de joignabilité, activés lorsque, d'une part, le terminal (2) appelant, émetteur de la requête (RT) d'établissement d'une communication (COM), utilise un média différent de celui correspondant à l'identifiant (FQDN) de communication prioritaire dans le profil (P) activé au cours de la tranche horaire (TH) à laquelle a lieu la requête (RT) d'établissement d'une communication (COM) par le terminal (2) appelant et, d'autre part, le terminal (2) appelant n'est pas compatible avec ce média, cette étape de conversion (99) consistant à convertir les données transmises par le terminal (2) appelant en données compatibles avec ce média.
